(19) Europäisches Patentamt
European Patent Office
Office européen des brevets

(11) **EP 4 231 868 B1**

(12) **EUROPEAN PATENT SPECIFICATION**

(45) Date of publication and mention
of the grant of the patent:
**03.12.2025 Bulletin 2025/49**

(21) Application number: **21883602.1**

(22) Date of filing: **15.10.2021**

(51) International Patent Classification (IPC):
*G06T 7/12* (2017.01)    *G06T 7/174* (2017.01)
*G06T 7/60* (2017.01)    *G06T 19/00* (2011.01)
*A41C 5/00* (2006.01)

(52) Cooperative Patent Classification (CPC):
**G06T 19/00; G06T 7/12; G06T 7/174; G06T 7/60;**
A41C 5/00; G06T 2207/10016; G06T 2207/10028;
G06T 2207/30068

(86) International application number:
**PCT/US2021/055179**

(87) International publication number:
**WO 2022/086812 (28.04.2022 Gazette 2022/17)**

(54) **METHODS, DEVICES AND SYSTEMS TO DETERMINE AND VISUALIZE BREAST BOUNDARY, PREDICT BRA CUP SIZE AND/OR EVALUATE PERFORMANCE OF A GARMENT USING 4D BODY SCANS OF AN INDIVIDUAL**

VERFAHREN, VORRICHTUNGEN UND SYSTEME ZUR BESTIMMUNG UND VISUALISIERUNG DER BRUSTGRENZE, VORHERSAGE DER BÜSTENHALTERGRÖSSE UND/ODER BEWERTUNG DER LEISTUNG EINES KLEIDUNGSSTÜCKS ANHAND VON 4D-KÖRPERABTASTUNGEN EINES INDIVIDUUMS

PROCÉDÉS, DISPOSITIFS ET SYSTÈMES POUR DÉTERMINER ET VISUALISER LA LIMITE DES SEINS, PRÉDIRE UNE TAILLE DE BONNETS DE SOUTIEN-GORGE ET/OU ÉVALUER LES PERFORMANCES D'UN VÊTEMENT À L'AIDE DE SCANS CORPORELS 4D D'UN INDIVIDU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2020 US 202063094985 P**

(43) Date of publication of application:
**30.08.2023 Bulletin 2023/35**

(73) Proprietor: **Cornell University**
**Ithaca, New York 14850 (US)**

(72) Inventor: **PEI, Jie**
**Greenville, Texas 75402 (US)**

(74) Representative: **Reddie & Grose LLP**
**The White Chapel Building**
**10 Whitechapel High Street**
**London E1 8QS (GB)**

(56) References cited:
**US-A1- 2011 295 112**    **US-A1- 2015 062 301**
**US-A1- 2015 154 453**    **US-A1- 2015 154 691**
**US-A1- 2019 107 391**    **US-A1- 2020 000 165**
**US-A1- 2020 242 686**    **US-B1- 10 176 275**

• **KHATAM HAMED ET AL: "In-vivo quantification of human breast deformation associated with the position change from supine to upright", MEDICAL ENGINEERING & PHYSICS, vol. 37, no. 1, 2015, pages 13 - 22, XP029131489, ISSN: 1350-4533, DOI: 10.1016/ J.MEDENGPHY.2014.09.016**
• **CHANG LI-XIA ET AL: "Studies of Sports Bra Based on Biomorphic Analyses of Females Breasts", BIOINFORMATICS AND BIOMEDICAL ENGINEERING , 2009. ICBBE 2009. 3RD INTERNATIONAL CONFERENCE ON, IEEE, PISCATAWAY, NJ, USA, 11 June 2009 (2009-06-11), pages 1 - 4, XP031489228, ISBN: 978-1-4244-2901-1**

EP 4 231 868 B1

- LIANG RUIXIN ET AL: "Numerical simulation of nonlinear material behaviour: Application to sports bra design", MATERIALS & DESIGN, ELSEVIER, AMSTERDAM, NL, vol. 183, 31 August 2019 (2019-08-31), XP085864701, ISSN: 0264-1275, [retrieved on 20190831], DOI: 10.1016/J.MATDES.2019.108177
- CHEN XIAONA ET AL: "Breast volume measurement by mesh projection method based on 3D point cloud data", vol. 27, no. 2, 31 March 2015 (2015-03-31), pages 221 - 236, XP009549969, ISSN: 0955-6222, Retrieved from the Internet <URL:https://www.researchgate.net/publication/275251032_Breast_volume_measurement_by_mesh_projection_method_based_on_3D_point_cloud_data> [retrieved on 20240802], DOI: 10.1108/IJCST-11-2013-0124

## Description

BACKGROUND

One most critical anthropometric measurement for product development of bras is breast size which associates with bra cup size. The boundary of the breast(s) is important in determining the breast size. This boundary information, which requires identifying where the fat tissue of the breast ceases, is not available on a 3D scan. Without this information, there is no way to determine the breast volume correctly or predict a breast size. No wonder bra fit has been troubling women for decades and as many as 85% of women wear a wrong-size bra on a daily basis. In addition, an ill--fitted bra can bring health concerns to the wearer. It may cause her back pain, shoulder pain and neck pain.

Currently, it is common practice to find the boundary through physical manipulation of the breasts, such as by pushing the entire breast upward to reveal the folding line. However, for obvious reasons, this method may be unpleasant experience for individuals.

Khatam Hamed et al.: "In-vivo quantification of human breast deformation associated with the position change from supine to upright", Medical Engineering & Physics, vol. 37, no. 1, 2015, pages 13-22 describes stereo-photographic imaging and digital image correlation for determining the variation of breast skin deformation as the subject orientation is altered from supine to upright. A change in subject's position from supine to upright can result in significant stretches in some parts of the breast skin, thereby providing basic data for validation of biomechanical breast models based on finite element formulations.

Chang Li-Xia et al. "Studies of Sports Bra Based on Biomorphic Analyses of Females Breasts", Bioinformatics and Biomedical Engineering , 2009. ICBBE 2009. 3rd International Conference on, IEEE, Piscataway, NJ, USA, 11 June 2009, pages 1-4 refers to a study from Oregon State University comparing sports bras on quantitative and subjective measures of support and comfort for small, medium, and large breasted women during exercise so as to evaluate the sports bra products comfort properties. In the study subjects were filmed while jogging on a treadmill at 6 mph in each bra style and in the nude condition. The average vertical displacement of the breast relative to the body was calculated for each condition.

Liang Ruixin et al.: "Numerical simulation of nonlinear material behaviour: Application to sports bra design", Materials & Design, Elsevier, Amsterdam, NL, vol. 183, 31 August 2019 describes simulating the static and dynamic contact conditions between the body and sports bras and dynamic displacements by using a finite element (FE) analysis. The FE model of the body is constructed with a rigid torso, hyper-elastic breasts, and subcutaneous tissues. Scanning is carried out to obtain a geometric model of the body. The material coefficients of the breasts are determined by examining the differences between the FE-modelled results and experimental data. The FE contact model of a female body and sports bra is used to calculate the static and dynamic contact pressure, dynamic displacement of the breasts, and natural frequencies of the breasts with and without bra.

Chen Xiaona et al.: "Breast volume measurement by mesh projection method based on 3D point cloud data", International Journal of Clothing Science and Technology, Bradford, GB, vol. 27, no. 2, 31 March 2015, pages 221-236 describes a breast volume measuring method by mesh projection based on three-dimensional (3D) point cloud data. Furthermore, a simple and standard breast boundary landmarking procedure is established, which avoids the arbitrariness of the definition of breast boundary and improves the repetition of landmarking.

US 2011/295112 A1, Mordaunt et al. describes automated analysis of the 3-D representation of the upper front torso (i) to recognize 3-D anatomical features, (ii) to orient the subject with reference to their anatomy or a display, (iii) to determine dimensional analysis including direct point-to-point lines, 3-D surface lines, and volume values, (iv) to simulate the outcome with the addition of breast implants including breast and nipple positioning, (v) to assist in the selection of the breast implants, and/or (vi) to assist in the planning of breast surgery. The automated analysis is based on the analysis of changes in a 3-D contour map of the upper torso, orientation analysis of 3-D features and planes, color analysis of 3-D features, and/or dimensional analysis of 3-D features and positions of the upper torso.

SUMMARY

Accordingly, disclosed is a non-contact method for determining a boundary of breasts.

The method may comprise receiving, by a processor, a plurality of three-dimensional (3D) images. The three-dimensional images may be successive 3D images. The 3D images may include the breasts of the same individual. The 3D images may be acquired while the individual is moving. The method may further comprise receiving, by the processor, a three-dimensional (3D) image acquired while the individual is stationary, defining a number of datapoints on the surface of the breasts in the 3D image acquired while the individual is stationary and a number of datapoints on the surface of an alignment region and selecting a subset of the 3D images acquired while the individual is moving. For each selected 3D image in the subset, the method may comprise pre-processing the selected 3D image to at least remove image data outside a predetermined region and rotate the selected 3D image to have each selected 3D image in the same orientation as the 3D image acquired while the individual is stationary, aligning the selected 3D image with respect to the alignment region of the 3D image acquired when the individual is stationary, defining a number of datapoints on the surface of the breasts in the selected 3D image and comparing the selected 3D image with the 3D image acquired when the individual is stationary by determining for each defined datapoint a vertical displacement. The method may further comprise determining, for each defined datapoint, a displacement parameter based on the determined vertical displacement for each 3D image in the subset of 3D images with respect to the 3D image acquired when the individual is stationary for the same defined datapoint, generating a mapping based on the displacement parameter for each defined datapoint and determining the boundary of the breasts using a threshold based on the mapping.

In an aspect of the disclosure, the subset of 3D images may comprise 3D images showing at least one complete gait cycle. The subset of 3D images may also comprise at least a predetermined number of 3D images. In an aspect of the disclosure, the subset of 3D images may comprise 3D images acquired after a preset number of 3D images and before a preset number of 3D images.

In an aspect of the disclosure, the predetermined region may include the torso. In an aspect of the disclosure, the preprocessing may further comprise identifying an underbust level and bust point for each breast and removing image data below the identified underbust level.

In an aspect of the disclosure, the alignment region may be at an upper back area of the individual. In an aspect of the disclosure, the alignment may comprise minimizing a shape discrepancy between each selected 3D image and the 3D image acquired while the individual is stationary by iteratively moving a selected 3D image and calculating the shape discrepancy.

In an aspect of the disclosure, the pre-processing may further comprise determining whether another body part is covering a surface of the breast and torso region and in response to determining that another body part is covering a surface of the breast or torso region, removing image data associated with the another body part and filling in a space corresponding to the removed image data with surface image points predicted for the space to maintain a curvature with a surrounding surface of the breast or maintain the curvature of the torso region.

In an aspect of the disclosure, the pre-processing may further comprise determining a first average value of image points in the predetermined region in a first direction, determining a second average value of image points in the predetermined region in a second direction orthogonal to the first direction and orthogonal to the longitudinal axis of the body; and defining the central axis of the predetermined region as intersecting by the first average value and the second average value and parallel to the longitudinal axis of the body. The first direction may be orthogonal to a longitudinal axis of the individual. The pre-processing may further comprise shifting the selected 3D image such that the central axis intersects an origin.

In an aspect of the disclosure, the vertical displacement may be determined using

$$d_j = z_{ij} - z_{i0}$$

where $d_j$ is an array containing the vertical displacements of all the defined datapoints for the jth 3D image, where j is $1 \leq j \leq N$, where N is the number of 3D images in the subset, $z_{ij}$ is the z-coordinate of the $i$-th defined datapoint of that jth 3D image ($1 \leq i \leq M$), where M is the number of defined datapoints, while $z_{i0}$ is the z-coordinate of the $i$-th point of the 3D image acquired while the same individual is stationary. In an aspect of the disclosure, the displacement parameter may be a standard deviation.

In an aspect of the disclosure, the threshold may be determined based on a range of the displacement parameters for the datapoints and a preset percentage. For example, the threshold may be determined from an average of the displacement parameters in a first region and subtracting an average of the displacement parameters in a second region and multiplying the preset percentage.

In an aspect of the disclosure, the vertical slices may be parallel to the frontal or coronal plane of the individual. In this aspect, the datapoints on the surface of the breasts may be defined by partitioning, by the processor, each breast into vertical slices and partitioning, by the processor, each vertical slice into a plurality of portions on the surface of the respective breast based on a fixed angular interval. Each portion may correspond to an angle value, and each portion may include a set of points. For each portion on each slice, the processor may determine an average distance among distances of the set of points with respect to one of the associated reference points for a corresponding vertical slice; and set a point associated with the average distance as a datapoint represented by the angle value corresponding to the portion. The datapoint may be one of the number of datapoints identified. When there is an absence of image points for a particular point in any of the vertical slices, a set of undefined values may be assigned to the datapoints for the particular portions. In an aspect of the disclosure, determining of the boundary may further comprise identifying, for each angle having a datapoint between a first angle and a second angle, a vertical slice having the displacement parameter closest to the threshold and identifying a median vertical slice among the identified vertical slices. Datapoints in the posterior direction of the median vertical slice may be removed.

In other aspects of the disclosure, the vertical slices may be parallel to the sagittal plane of the individual. In this aspect, the datapoints on the surface of the breasts may be defined by partitioning, by the processor, each breast into vertical slices, the vertical slices being parallel to the sagittal plane and partitioning, by the processor, each vertical slice into a plurality of portions on the surface of the respective breast based on a fixed interval with respect to a first direction. Each portion may correspond to a specific value in the first direction, and each portion may include a set of points. The first direction may be orthogonal to the longitudinal axis and parallel to the sagittal plane. For each portion on each slice, the processor may determine an average coordinate among coordinates of the set of points for a corresponding vertical slice, the coordinate being in a direction parallel to the longitudinal axis and set a point associated with the average coordinate as a datapoint represented by the specific value corresponding to the portion. The datapoint may be one of the number of datapoints identified. In an aspect of the disclosure, determining of the boundary may further comprise identifying, for each vertical slice, the specific value having the displacement parameter closest to the threshold and identifying a median specific value among the identified specific values. Datapoints in the posterior direction of the median specific value may be removed.

In an aspect of the disclosure, the mapping may be displayed. In an aspect of the disclosure, the method may further comprise removing image data from the 3D image acquired when the individual is stationary based on the threshold and displaying a 3D image of the breasts.

Also disclosed is a non-contact method for predicting a cup size of breasts of an individual. The method may comprise receiving, by a processor, a plurality of three-dimensional (3D) images. The three-dimensional images may be successive 3D images. The 3D images may include the breasts of the same individual. The 3D images may be acquired while the individual is moving. The method may further comprise receiving, by the processor, a three-dimensional (3D) image acquired while the individual is stationary, defining a number of datapoints on the surface of the breasts in the 3D image acquired while the individual is stationary and a number of datapoints on the surface of an alignment region and selecting a subset of the 3D images acquired while the individual is moving. For each selected 3D image in the subset, the method may comprise pre-processing the selected 3D image to at least remove image data outside a predetermined region and rotate the selected 3D image to have each selected 3D image in the same orientation as the 3D image acquired while the individual is stationary, aligning the selected 3D image with respect to the alignment region of the 3D image acquired when the individual is stationary, defining a number of datapoints on the surface of the breasts in the selected 3D image and comparing the selected 3D image with the 3D image acquired when the individual is stationary by determining for each defined datapoint a vertical displacement. The method may further comprise determining, for each defined datapoint, a displacement parameter based on the determined vertical displacement for each 3D image in the subset of 3D images with respect to the 3D image acquired when the individual is stationary for the same defined datapoint, generating a mapping based on the displacement parameter for each defined datapoint and determining the boundary of the breasts using a threshold based on the mapping. The method may further comprise separating the breasts from other parts of the 3D image acquired while the individual is stationary based on the threshold value, defining a number of datapoints on the surface of the breasts in the 3D image acquired while the individual is stationary using horizontal slicing, calculating a shape discrepancy between the breasts in the 3D image acquired while the individual is stationary using the defined datapoints and datapoints in 3D images of breasts associated with known cup sizes, respectively and determining the cup size based on the calculated shape discrepancy for each known cup size. Each 3D image for the known cup sizes may be acquired while a model is stationary.

In an aspect of the disclosure, the method may further comprise at least one of displaying the determined cup size or transmitting the determined cup size to a preset device.

Also disclosed is a non-contact method for evaluating a performance of a garment. The method may comprise receiving, by a processor, a plurality of three-dimensional (3D) images. The 3D images may be successive 3D images. The 3D images may include the breasts of the same individual. The 3D images may be acquired while the individual is moving. The method may further comprise receiving, by the processor, a three-dimensional (3D) image acquired while the individual is stationary, defining a number of datapoints on the surface of the breasts in the 3D image acquired while the individual is stationary and a number of datapoints on the surface of an alignment region and selecting a subset of the 3D images acquired while the individual is moving. For each selected 3D image in the subset, the method may comprise pre-processing the selected 3D image to at least remove image data outside a predetermined region and rotate the selected 3D image to have each selected 3D image in the same orientation as the 3D image acquired while the individual is stationary, aligning the selected 3D image with respect to the alignment region of the 3D image acquired when the individual is stationary, defining a number of datapoints on the surface of the breasts in the selected 3D image and comparing the selected 3D image with the 3D image acquired when the individual is stationary by determining for each defined datapoint a displacement. The method may further comprise determining, for each defined datapoint, a displacement parameter based on the determined displacement for each 3D image in the subset of 3D images with respect to the 3D image acquired when the individual is stationary for the same defined datapoint, generating a mapping based on the displacement parameter for each defined datapoint, identifying areas in the mapping with a displacement parameter greater than a threshold; and generating a report based on the identified areas.

In an aspect of the disclosure, the pre-processing may further comprise determining whether another body part is covering a surface of the breast and torso region and in response to determining that another body part is covering a surface of the breast or torso region, removing image data associated with the another body part and filling in a space corresponding to the removed image data with surface image points predicted for the space to maintain a curvature with a surrounding surface of the breast or maintain the curvature of the torso region.

In an aspect of the disclosure, the datapoints on the surface of the breasts may be defined using horizontal slicing. In an aspect of the disclosure, the datapoints may be define by partitioning, by the processor, the breasts into horizontal slices and partitioning, by the processor, each horizontal slice into a plurality of portions on the surface of the breasts based on a fixed angular interval. Each portion may correspond to an angle value, and each portion may include a set of points. For each portion on each slice, the processor may determine an average distance among distances of the set of points with respect to one of the associated reference points and set a point associated with the average distance as a datapoint represented by the angle value corresponding to the portion. The datapoint may be one of the number of datapoints identified. When there is an absence of image points for a particular point in any of the horizontal slices, a set of undefined values may be assigned to the datapoints for the particular portions.

In an aspect of the disclosure, the displacement may be a horizontal displacement. The horizontal displacement may be determined using

$$d'_j = \sqrt{x_{ij}^2 + y_{ij}^2} - \sqrt{x_{i0}^2 + y_{i0}^2}$$

where $d'_j$ is an array containing distances from the associated reference point for the horizontal slice in $j$-th 3D image, where j is $1 \leq j \leq N$, where N is the number of 3D images in the subset $x_{ij}$ and $y_{ij}$ is the x-coordinate and y-coordinate, respectively, of the $i$-th datapoint in the j-th 3D image, where $1 \leq i \leq P$, where P is the number of defined datapoints, while $x_{i0}$ and $y_{i0}$ is the x-coordinate and y-coordinate, respectively, of the $i$-th datapoint of the 3D image acquired when the individual is stationary. The displacement parameter may be a standard deviation of the calculated horizontal displacement for a given datapoint.

In an aspect of the disclosure, the base image for comparison may be a three-dimensional image acquired while the individual is stationary or one of the three-dimensional images acquired while the individual is moving for determining the boundary of the breasts. In an aspect of the disclosure, a non-contact method for determining a boundary of the breasts may comprise receiving a plurality of three-dimensional (3D) images. In some aspects, the 3D images may be successive 3D images acquired while the individual is moving. The plurality of 3D images may include the breasts of the same individual. In other aspects, one 3D image may be acquired while the individual is stationary. The method may further comprise selecting one 3D image as a base image. The method may further comprise selecting a subset of the 3D images acquired while the individual is moving. For the base image, the method may comprise pre-processing the base image to at least remove image data outside a predetermined region and rotate to a target orientation and defining a number of datapoints on the surface of the breasts and a number of datapoints on the surface of an alignment region. For the remaining selected 3D images in the subset (after the base 3D image may be removed) or the selected 3D images in the subset, the method may comprise pre-processing the 3D image to at least remove image data outside a predetermined region and rotate the 3D image to have each 3D image selected in the same orientation as the base image, aligning the 3D image with respect to the alignment region of the base image, defining a number of datapoints on the surface of the breasts in the 3D image; and comparing the 3D image with the base image by determining for each defined datapoint a vertical displacement. The method may further comprise determining, for each defined datapoint, a displacement parameter based on the determined vertical displacement for each 3D image selected with respect to the base image for the same defined datapoint, generating a mapping based on the displacement parameter for each defined datapoint, and determining the boundary of the breasts using a threshold based on the mapping.

In another aspect of the disclosure, a non-contact method for predicting a cup size of breasts of an individual may comprise receiving a plurality of three-dimensional (3D) images. In some aspects, the 3D images may be successive 3D images acquired while the individual is moving. The plurality of 3D images may include the breasts of the same individual. In other aspects, one 3D image may be acquired while the individual is stationary. The method may further comprise selecting one 3D image as a base image. The method may further comprise selecting a subset of the 3D images acquired while the individual is moving. For the base image, the method may comprise pre-processing the base image to at least remove image data outside a predetermined region and rotate to a target orientation and defining a number of datapoints on the surface of the breasts and a number of datapoints on the surface of an alignment region. For the remaining selected 3D images in the subset (after the base image may be removed) or the selected 3D images in the subset, the method may comprise pre-processing the 3D image to at least remove image data outside a predetermined region and rotate the 3D image to have each 3D image selected in the same orientation as the base image, aligning the 3D image with respect to the alignment region of the base image, defining a number of datapoints on the surface of the breasts in the 3D image; and comparing the 3D image with the base image by determining for each defined datapoint a vertical displacement. The method may further comprise determining, for each defined datapoint, a displacement parameter based on the determined vertical displacement for each 3D image selected with respect to the base image for the same defined datapoint, generating a mapping based on the displacement parameter for each defined datapoint, and determining the boundary of the breasts using a threshold based on the mapping. The method may further comprise separating the breasts from other parts of the 3D image acquired while the individual is stationary based on the threshold value, defining a number of datapoints on the surface of the breasts in the 3D image acquired while the individual is stationary using horizontal slicing, calculating a shape discrepancy between the breasts in the 3D image acquired while the individual is stationary using the defined datapoints and datapoints in 3D images of breasts associated with known cup sizes, respectively and determining the cup size based on the calculated shape discrepancy for each known cup size. Each 3D image for the known cup sizes may be acquired while a model is stationary.

In another aspect of the disclosure, a non-contact method for evaluating a performance of a garment may comprise receiving a plurality of three-dimensional (3D) images. In some aspects, the 3D images may be successive 3D images acquired while the individual is moving. The plurality of 3D images may include the breasts of the same individual. In other aspects, one 3D image may be acquired while the individual is stationary. The method may further comprise selecting one 3D image as a base image. The method may further comprise selecting a subset of the 3D images acquired while the individual is moving. For the base image, the method may comprise pre-processing the base image to at least remove image data outside a predetermined region and rotate to a target orientation and defining a number of datapoints on the surface of the breasts and a number of datapoints on the surface of an alignment region. For the remaining selected 3D images in the subset (after the base image may be removed) or the selected 3D images in the subset, the method may comprise pre-processing the 3D image to at least remove image data outside a predetermined region and rotate the 3D image to have each 3D image selected in the same orientation as the base image, aligning the 3D image with respect to the alignment region of the base image, defining a number of datapoints on the surface of the breasts in the 3D image; and comparing the 3D image with the base image by determining for each defined datapoint a displacement. The method may further comprise determining, for each defined datapoint, a displacement parameter based on the determined displacement for each 3D image selected with respect to the base image for the same defined datapoint, generating a mapping based on the displacement parameter for each defined datapoint, and determining the boundary of the breasts using a threshold based on the mapping. The method may further comprise identifying areas in the mapping with a displacement parameter greater than a threshold; and generating a report based on the identified areas.

Also disclosed is an apparatus or system which may comprise a three-dimensional (3D) image scanner, a memory, a processor and a display. The 3D image scanner may be configured to obtain images of an individual and generate a plurality of 3D images of the individual. The memory may be configured to store image data for each 3D image. The processor may be configured to select a subset of the 3D images. The subset of 3D images may be 3D images acquired while the individual is moving. The processor may also be configured to select a base image. The base image may be a 3D image acquired while the individual is stationary or one of the selected 3D images in the subset. For the base image, the processor may be configured to pre-process the base image to at least remove image data outside a predetermined region and rotate to a target orientation; and define a number of datapoints on the surface of the breasts and a number of datapoints on the surface of an alignment region. For the selected 3D images in the subset or the remaining 3D images in the subset (after the based 3D image may be removed), the processor may be configured to pre-process the 3D image to at least remove image data outside a predetermined region and rotate the 3D image to have each 3D image selected in the same orientation as the base image, align the 3D image with respect to the alignment region of the base image, define a number of datapoints on the surface of the breasts in the 3D image and compare the 3D image with the base image by determining for each defined datapoint a vertical displacement. The processor may also be configured to determine, for each defined datapoint, a displacement parameter based on the determined vertical displacement for each 3D image selected with respect to the base image for the same defined datapoint, generate a mapping based on the displacement parameter for each defined datapoint and determine the boundary of the breasts using a threshold based on the mapping. The display may be configured to display at least the mapping.

In an aspect of the disclosure, the datapoints on the surface of the breasts may be defined using vertical slicing.

In an aspect of the disclosure, the 3D images may be successive 3D images acquired while the individual is moving. In other aspects, the 3D image scanner may be further configured to obtain images while the individual is stationary and generate a three-dimensional image (3D) of the individual.

In an aspect of the disclosure, the 3D image scanner may comprise a plurality of cameras positioned at different locations to cover a 360° view.

In an aspect of the disclosure, the apparatus or system may comprise one or more communication interfaces. In an aspect of the disclosure, the 3D image scanner may be configured to transmit the 3D images to the processor via a communication interface. The communication interface may be wireless. In an aspect of the disclosure, the processor may be configured to transmit the mapping to the display via a communication interface.

In an aspect of the disclosure, the processor may be configured to predict a cup size of the breasts of an individual. In this aspect, the processor may be configured to separate the breasts from other parts of the 3D image acquired while the individual is stationary based on the threshold value, define a number of datapoints on the surface of the breasts in the 3D image acquired while the individual is stationary using horizontal slicing, calculate a shape discrepancy between the breasts in the 3D image acquired while the individual is stationary using the defined datapoints and datapoints in images of breasts associated with known cup sizes, respectively, and predict the cup size based on the calculated shape discrepancy for each known cup size. Each 3D image for the known cup sizes may be acquired with a model is stationary and processed in the same manner as the 3D image acquired while the individual is stationary.

In an aspect of the disclosure, the predicted cup size may be displayed and/or transmitted to a user terminal.

In an aspect of the disclosure, the apparatus or system may further comprise a point of sales terminal and the display may be in the point of sales terminal.

Also disclosed is an apparatus or system which may comprise a three-dimensional (3D) image scanner, a memory, and a processor. The 3D image scanner may be configured to obtain images of an individual and generate a plurality of 3D images of the individual. The memory may be configured to store image data for each 3D image. The processor may be configured to select a subset of the 3D images. The subset of 3D images may be 3D images acquired while the individual is moving. The processor may also be configured to select a base image. The base image may be a 3D image acquired while the individual is stationary or one of the selected 3D images in the subset (or another 3D image). For the base image, the processor may be configured to pre-process the base image to at least remove image data outside a predetermined region and rotate to a target orientation; and define a number of datapoints on the surface of the breasts and a number of datapoints on the surface of an alignment region. For the selected 3D images in the subset or the remaining 3D images in the subset (after the base 3D image may be removed), the processor may be configured to pre-process the 3D image to at least remove image data outside a predetermined region and rotate the 3D image to have each 3D image selected in the same orientation as the base image, align the 3D image with respect to the alignment region of the base image, define a number of datapoints on the surface of the breasts in the 3D image and compare the 3D image with the base image by determining for each defined datapoint a displacement. The processor may also be configured to determine, for each defined datapoint, a displacement parameter based on the determined displacement for each 3D image selected with respect to the base image for the same defined datapoint, generate a mapping based on the displacement parameter for each defined datapoint, identify areas in the mapping with a displacement parameter greater than a threshold and generate a report based on the identified areas.

In an aspect of the disclosure, the apparatus or system may further comprise a display and the report may be displayed on the display. In other aspects, the processor may transmit the report to a user terminal.

In an aspect of the disclosure, the 3D images may be successive 3D images acquired while the individual is moving. In other aspects, the 3D image scanner may be further configured to obtain images while the individual is stationary and generate a three-dimensional image (3D) of the individual.

In an aspect of the disclosure, the 3D images may be acquired while the individual is wearing a garment. In an aspect of the disclosure, the garment may be a sports bra. In an aspect of the disclosure, the 3D images may be also acquired while the individual is nude and the processor may be configured to compare determined displacement when the individual is wearing the garment and when the individual is nude. In an aspect of the disclosure, the report may comprise a percent difference in the displacement when the individual is wearing the garment and when the individual is nude.

In an aspect of the disclosure, the displacement may be a horizontal displacement.

Also disclosed is an apparatus which may comprise a processor and a display. The processor may be configured to receive a plurality of three-dimensional (3D) images and store the 3D images in memory, select a subset of the 3D images and select a base image. The subset of 3D images may be 3D images acquired while the individual is moving. The base image may be one of the selected 3D images in the subset. The base image may be another 3D image acquired while the individual is moving, or 3D image acquired while the individual is stationary. For the base image, the processor may be configured to pre-process the base image to at least remove image data outside a predetermined region and rotate to a target orientation and define a number of datapoints on the surface of the breasts and a number of datapoints on the surface of an alignment region. For the selected 3D images in the subset or the remaining 3D images in the subset (after the base 3D image may be removed), the processor may be configured to pre-process the 3D image to at least remove image data outside a predetermined region and rotate the 3D image to have each 3D image selected in the same orientation as the base image, align the 3D image with respect to the alignment region of the base image, define a number of datapoints on the surface of the breasts in the 3D image and compare the 3D image with the base image by determining for each defined datapoint a vertical displacement. The processor may be further configured to determine, for each defined datapoint, a displacement parameter based on the determined vertical displacement for each 3D image selected with respect to the base image for the same defined datapoint, generate a mapping based on the displacement parameter for each defined datapoint and determine the boundary of the breasts using a threshold based on the mapping. The display may be configured to display at least the mapping.

In an aspect of the disclosure, the processor may be further configured to predict a cup size of breasts of an individual.

Also disclosed is an apparatus which may comprise a processor. The processor may be configured to receive a plurality of three-dimensional (3D) images, store the 3D images in memory, select a subset of the 3D images and select a base image. The subset of 3D images may be 3D images acquired while the individual is moving. The base image may be one of the selected 3D images in the subset. The base image may be another 3D image acquired while the individual is moving, or 3D image acquired while the individual is stationary. For the base image, the processor may be configured to pre-process the base image to at least remove image data outside a predetermined region and rotate to a target orientation and define a number of datapoints on the surface of the breasts and a number of datapoints on the surface of an alignment region. For the selected 3D images in the subset or the remaining 3D images in the subset (after the base 3D image may be removed), the processor may be configured to pre-process the 3D image to at least remove image data outside a predetermined region and rotate the 3D image to have each 3D image selected in the same orientation as the base image, align the 3D image with respect to the alignment region of the base image, define a number of datapoints on the surface of the breasts in the 3D image and compare the 3D image with the base image by determining for each defined datapoint a displacement. The processor may be further configured to determine, for each defined datapoint, a displacement parameter based on the determined displacement for each 3D image selected with respect to the base image for the same defined datapoint, generate a mapping based on the displacement parameter for each defined datapoint, identify areas in the mapping with a displacement parameter greater than a threshold and generate a report based on the identified areas.

BRIEF DESCRIPTION OF THE DRAWINGS

The patent or application file contains at least one drawing executed in color. Copies of this patent or patent application publication with color drawing(s) will be provided by the Office upon request and payment of the necessary fee.

Fig. 1A illustrates a device in accordance with aspects of the disclosure;
Fig. 1B illustrates a system in accordance with aspects of the disclosure;
Fig. 2 illustrates a method in accordance with aspects of the disclosure;
Fig. 3 illustrates an example of images for one compete gait cycle;
Fig. 4 illustrates a pre-processing method in accordance with aspects of the disclosure;
Figs. 5A-5C illustrate an example of the pre-processing in accordance with aspects of the disclosure showing arms covering parts of the predetermined section (Fig. 5A), holes caused by data removal (Fig. 5B) and filling in the holes (Fig. 5C) in accordance with aspects of the disclosure;
Figs. 6A-6E illustrate an example of rotation of an image;
Fig. 7A illustrates an example of the underbust level and bust slice in accordance with aspects of the disclosure;
Fig. 7B illustrates an example of a bust slice and datapoints on the slice and determination of bust points in accordance with aspects of the disclosure;
Fig. 8 illustrates a method of defining the central axis and shifting the image in accordance with aspects of the disclosure;
Figs. 9A and 9B illustrate an example of a central axis and shifting of the predetermined section in accordance with aspects of the disclosure;
Fig. 10 illustrates a method for defining the surface datapoints in the alignment region in accordance with aspects of the disclosure;
Fig. 11A illustrates an example of the angular increments for the surface datapoints in accordance with aspects of the disclosure;
Fig. 11B illustrates an example of the horizontal slices in the alignment region in accordance with aspects of the disclosure;
Fig. 12A illustrates an example of images offset (not aligned) and Fig. 12B illustrates an example of the images aligned in accordance with aspects of the disclosure based on the alignment region;
Figs. 13A-13C illustrate an example of a vertical slice, surface datapoints for vertical slices and the reference point(s) for the vertical slices for vertical slicing in accordance with an aspects of the disclosure;
Fig. 14 illustrates a method for defining the surface datapoints on one of the breast regions for the vertical slicing shown in Figs 13A-Fig. 13C in accordance with aspects of the disclosure;
Figs. 15A-15D illustrate an example of vertical slices, surface datapoints for vertical slices and the reference point(s) for the vertical slices for vertical slicing in accordance with other aspects of the disclosure;
Fig. 16 illustrates a method for defining the surface datapoints for the breast region using the vertical slicing shown in Figs. 15A-15D in accordance with aspects of the disclosure;
Figs. 17A and 17B illustrate an example of a heat map superposed over the right breast (Fig. 17A) and the left breast (Fig. 17B) in accordance with aspects of the disclosure;

Fig. 18 illustrates an example of a heat map superposed over the breasts and the first area and the second area used to determine a threshold for separation in accordance with aspects of the disclosure;

Fig. 19 illustrates an example of the heat map being affected by bra straps;

Fig. 20 illustrates a method for determining a separation vertical slice in accordance with aspects of the disclosure;

Fig. 21A and Fig. 21B illustrate an example of the separation slice in accordance with aspects of the disclosure;

Fig. 22 illustrates a method for determining a separation y-value in accordance with aspects of the disclosure;

Figs. 23A-23C illustrate an example of the vertical displacement for three different body types where the images are aligned in the alignment region in accordance with aspects of the disclosure;

Fig. 24 illustrates another method in accordance with aspects of the disclosure;

Fig. 25 illustrates another method in accordance with aspects of the disclosure;

Fig. 26A and 26B illustrate examples of heat maps generated in accordance with the method illustrated in Fig. 25.

DETAILED DESCRIPTION

In accordance with aspects of the disclosure, a device 10 or system 30 captures a series of three-dimensional images of an individual, while the individual is moving to determine displacement of the breasts. In some aspects of the disclosure, the displacement may then be used to determine boundary information between the breasts and chest wall. The boundary information may also be used to predict a cup size for a bra. The 4D scanning described herein (where the fourth dimension is time), also makes it possible to track the whole breast under motion, therefore, the scans can also provide information regarding the shape change of breasts during physical activity. In some aspect of the disclosure, this information may be used to evaluate the performance of a garment such as a sports bra. In some aspects, the device 10 or system 30 may capture an 3D image of the individual while the individual is stationary. Either the 3D image captured while the individual is stationary (static image) or one of the 3D images captured while the individual is moving (dynamic image) is used as a base image for comparison.

During physical activities, the breasts usually have a time delay in displacement with the chest wall, and this relative displacement in vertical direction causes the bouncing of breasts. Understanding the vertical displacement of breasts may be critical as many studies have shown that the vertical displacement during physical activities is closely related to breast discomfort.

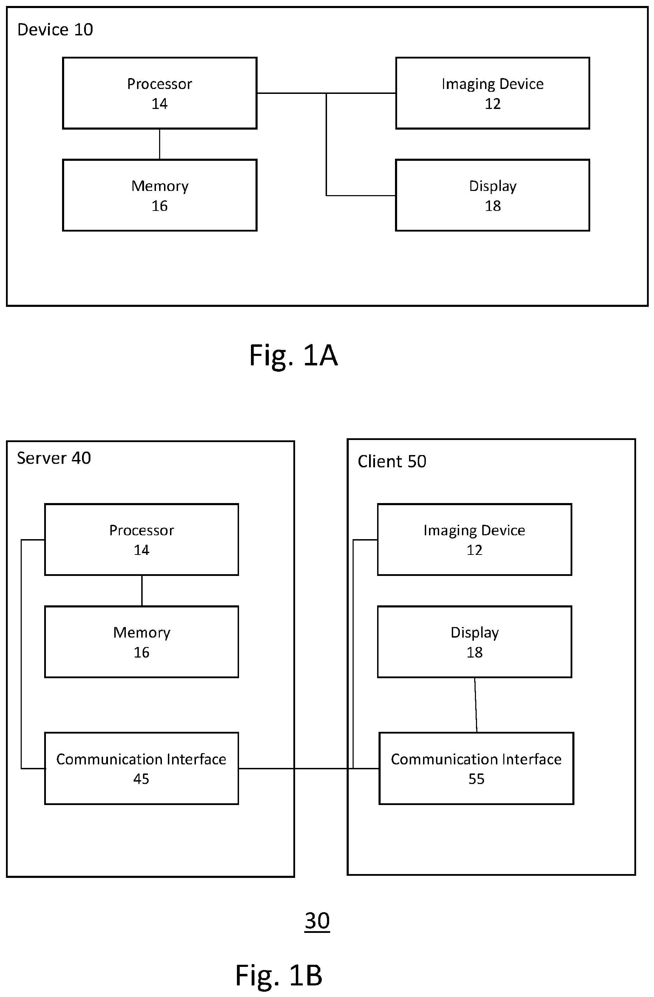

Fig. 1A illustrates a device 10 in accordance with aspects of the disclosure. The device 10 may comprise an imaging device 12, a processor 14, a memory 16 and a display 18. The imaging device 12 may be a 3D scanner. The 3D scanner may be a temporal 3d full body scanner such as 3dMDbody18.t System Model available from 3dMD, LLC. In an aspect of the disclosure, the 3D image is a combination of images obtained from multiple different cameras located at different views. In other aspects, the imaging device 12 may be any array of cameras linked together and synchronized to generate the 3D image(s). The cameras may be in respective mobile phones or other devices such as, but not limited to a tablet or laptop with a camera, where each device is positioned in a stationary position. The stationary positions may be such that the 3D image covers 360 degrees of an individual. These devices may be linked via BLUETOOTH or other wireless connection to transmit the images to one of the devices for reconstruction or generating of the 3D image from the multiple images from the multiple cameras taken at the same time. In other aspects, the imaging device 12 may be multiple web cameras or desktop cameras for a computer. These cameras are available from Logitech. In an aspect of the disclosure, the imaging device 12 may cameras incorporated into a treadmill or other exercise equipment also at different positions. The images from the multiple cameras may be timestamps or synchronized such that a 3D image can be constructed from the multiple images from the multiple cameras acquired while the individual is moving (time series of 3D images can be constructed).

The processor 14 may be, for example, a central processing unit (CPU) or graphic processing unit (GPU) of the device 10, a microprocessor, a system on chip, and/or other types of hardware processing unit. The memory 16 may be configured to store a set of instructions, where the instructions may include code such as source code and/or executable code. The processor 14 may be configured to execute the set of instructions stored in the memory 16 to implement the methods and functions described herein. In some examples, the set of instructions may include code relating to various image processing techniques, encryption and decryption algorithms, slicing (vertical and/or horizontal), displacement calculation, heat map determination and/or other types of techniques and algorithms that can be applied to implement the methods and functions described herein.

The display 18 may be a touchscreen such as on a mobile phone or tablet. The display 18 may also be a screen of a point of sales terminal at a store. In other aspects, the display 18 may be a computer screen or television screen. In accordance with aspects of the disclosure, the display 18 may be configured to display the heat map(s) determined from a displacement parameter, the threshold(s) for the boundary, the separated breasts defined by the boundaries, the predicted cup size and performance evaluation reports as described herein.

In some aspects of the disclosure, the device 10 may perform all the functionality described herein. However, in other aspects, a system 30 comprising multiple devices may collectively perform the functionality. As shown in Fig. 1B. the system 30 may comprise a server 40 and a client 50 (terminal). The client 50 may be configured to obtain the 3D images and transmit the same to the server 40 for processing. The client 50 may comprise the imaging device 12 and the display 18 described above. The client 50 may communicate with the server 40 via a communication interface 55. Although not shown in Fig. 1B, the client device may also comprise a processor and memory. The memory may be for temporally storing the image data prior to transmission to the server 40. The processor may control the imaging device 12 to acquire the 3D images and construct the 3D images from the multiple images from the cameras. This communication interface 55 may be a wireless interface such as a WI-FI® interface. In other aspects, the wireless interface may be BLUETOOTH®. In other aspects, the communication interface 55 may be for wired communication such as Ethernet. The server 40 may comprise the processor 14 and memory 16 described above. Similarly, the server 40 may comprises a communication interface 45 for communicating with the client 50 (terminal).

In some aspects, the server 40 may also have a display. The display may display the heat map(s) determined from a displacement parameter, the threshold(s) for the boundary, the separated breasts defined by the boundaries, the predicted cup size and performance evaluation reports as described herein.

In other aspects, the instead of the client 50 transmitting the image data to the server 40, the client 50 may have a memory card and the images may be stored on the memory card and transferred to the server 40 via removal of the memory card from the client 50 and inserted into the server 40. In some aspects, the client 50 may include multiple DSLRs.

In some aspects, the client 50 may be installed in a fitting room of a store. For example, the client 50 may comprise the multiple cameras which may be installed on a railing system on a wall or door of an individual fitting room. The cameras may be mounted to different portions of the fitting room to have complete coverage, e.g., enable 360 degrees acquisition. The person may be able to raise or lower the client 50 such that the imaging device 12 is aligned with the height of the person (breast height) (via the railing system). The server 40 may also be located within the same store such as a point of sales terminal. In this manner, the individual may be able to be imaged (3D image constructed) in privacy but at the same time, the cup size prediction may be shown to an employee of the store.

In other aspects, the client 50 may be used at home such that the individual may be imaged in the privacy of the home and the server 40 may located at a manufacturer of the garment. The individual may position the multiple cameras around a room such that the 3D image may be constructed from the images from each camera.

In other aspects, the device 10/system 30 may be located at the manufacturer and be used to design and test a garment.

In accordance with aspects of the disclosure, the imaging device 12 acquires a plurality of 3D images while the individual is running. The 3D images include the chest/breast region. The individual may be running in place in front of the imaging device 12. Alternatively, the individual may be running on a treadmill (or another piece of exercise equipment). In some aspects, the imaging device 12 may also acquire a 3D image of the individual when the individual is stationary. For the stationary 3D image, it is preferred that the arms do not cover the breasts. The image data is transmitted (transfers) to the processor 14 (and memory 16). The image data for the 3D image(s) is with respect to a coordinate system of the imaging device 12 (e.g., its origin). In some aspects, the individual may be wearing a bra or another garment while the 3D images are captured. In other aspects, the individual may be nude.

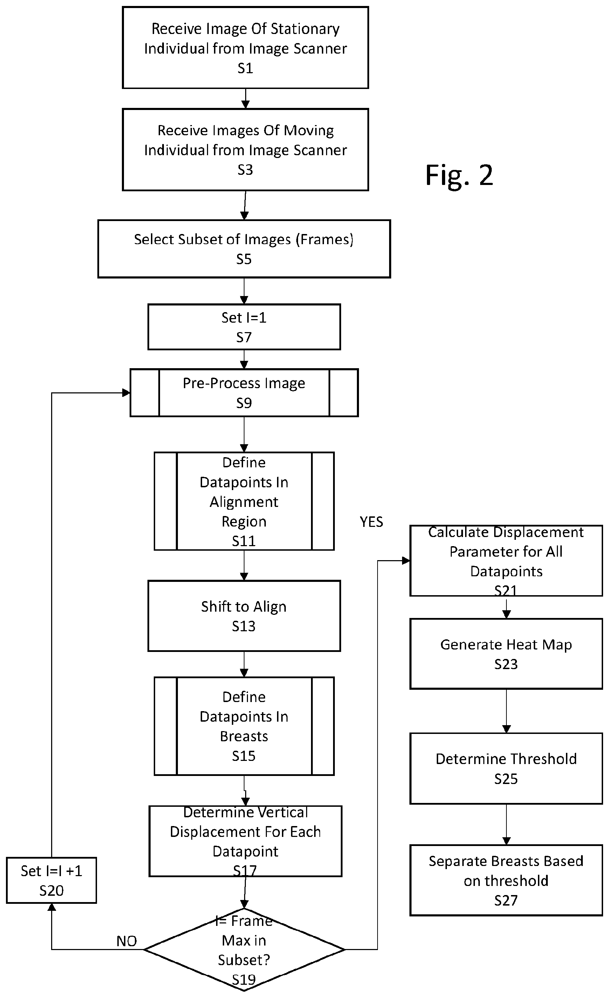

Fig. 2 illustrates a method in accordance with aspects of the disclosure. At S1, the processor 14 may receive the 3D image (3D image acquired with the individual is stationary image) of the individual (also referred as stationary image stationary 3D image or static image). As noted above, the 3D image is a combination of images acquired from different locations by cameras at the same time (e.g., reconstruction or model). The stationary 3D image may be used as the base image for comparison with the 3D images of the individual moving (e.g., running) to determine displacement. In other aspects, S1 may be omitted when one of the 3D images acquired when the individual is moving is used as the based image for comparison. At S3, the processor 14 may receive the plurality of 3D images (acquired at different times) of the individual acquired while the individual was moving (where each images which is combined to obtain a single 3D image is acquired at the same time from multiple different locations).

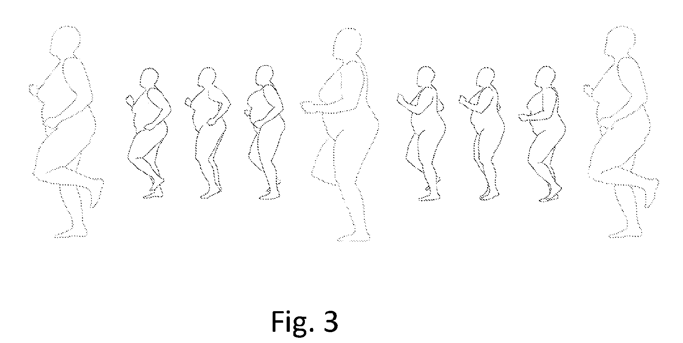

At S5, a subset of the 3D images of the individual acquired while the individual was moving may be selected for the displacement determination. In an aspect of the disclosure, the processor 14 may automatically select the subset. In some aspects, the number of 3D images selected may be greater than a preset number of 3D images. In some aspects, the preset number is 9. Additionally, since when a person starts to run, movement is not consistent, in an aspect of the disclosure, the selected 3D images are after a second preset number of 3D images, such that the pattern of displacement may be uniform through the gait cycle. In other aspects of the disclosure, the selected 3D images should include representative images from at least one complete gait cycle. In some aspects, the selected 3D images may have a uniform timing between them. Fig. 3 illustrates an example of images for one compete gait cycle. The larger images (first and last) highlight the start of a cycle. The larger image in the center highlights the middle of the cycle. The more 3D images selected, the higher the accuracy of the displacement determination may be; however, it increases the processing time and requires more processing capacity. In other aspects of the disclosure, 3D images from a half of a gait cycle may be selected. However, in this aspect, more 3D images from the half of gait cycle may be selected.

In other aspects of the disclosure, the processor 14, using machine learning, may identify key image positions in the gait cycle and select 3D images based on the identification. In other aspects, a person may manually select the subset of 3D images. In some aspects, one of the selected 3D images may be used as the base image.

Each of the selected 3D images (subset) may be subsequently processed to determine displacement (other than the one 3D image in the subset selected as the base image, if any). S9-S19 is repeated for each of the selected 3D images in the subset, where the iterations may be determined using a counter. For example, at S7 the processor 14 may set a counter to 1 (I=1) and obtain the selected 3D image in the subset.

At S9, the processor 14 performs pre-processing of the 3D image, e.g., series of image pre-processing steps to identify a predetermined section (remove data outside the reason), fill any holes in the predetermined section caused by the removal, match orientation, identify an underbust level (and bust) and define a central axis and shift the image data as needed.

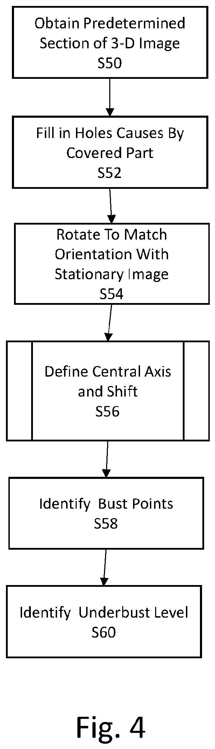

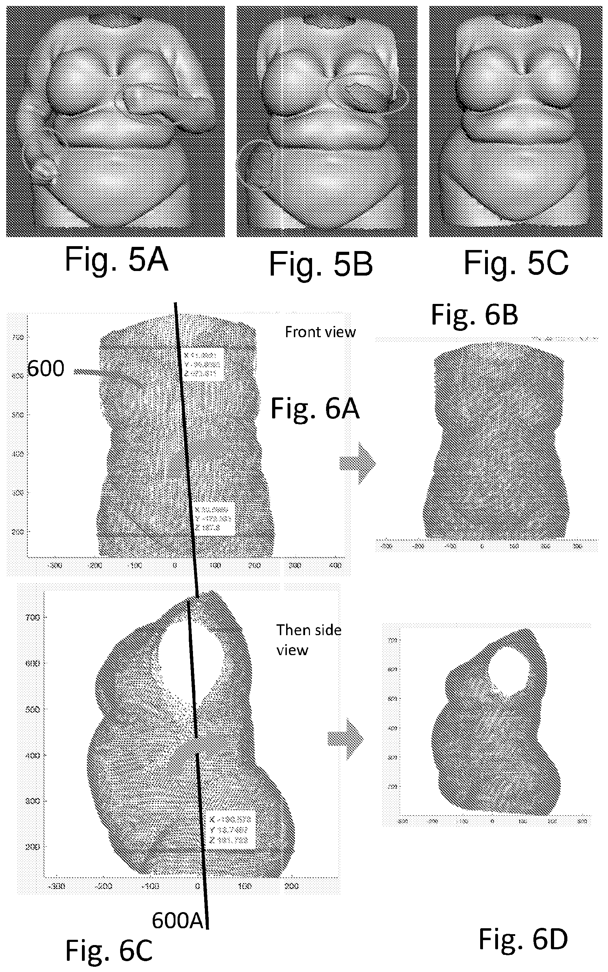

Fig. 4 illustrates an example of the pre-processing of the 3D images in accordance with aspects of the disclosure. At S50, the processor 14 may identify the predetermined section of the 3D image. In some aspects of the disclosure, the predetermined section is the torso region of the body. The torso region includes the chest, the breasts and the stomach. In the identification, the processor 14 may perform data cleaning, such as removing noisy image points, removing the limbs, neck, and head, e.g., removal of image data. Because the individual may be running, the person's arms may be too close to the torso region and cover portion thereof as shown in Fig. 5A. The circles identify the covered portions. When the parts of the body other than the predetermined section of an image are removed, e.g., arms, this may result in holes or data voids in the predetermined section, such as shown in Fig. 5B. The circles in Fig. 5B show the holes. Therefore, at S52 the processor 14 may fill in any holes in the predetermined section caused by the removal. The holes may be filled in my retaining the shape of the object, e.g., breast or abdominal region. For example, the processor 14 may estimate the curvature using the surrounding area and add the data to maintain the estimated curvature. In some aspects, the processor 14 may use a program such as Meshmixer available from Autodesk, Inc., to fill image the holes. For example, the received image data for a 3D image may include a mesh pattern for the surface image points. This mesh pattern may be triangular. One or more triangles in the mesh pattern adjacent to the opens may be selected and the vertices of the selected triangles may be used for the estimation. Fig. 5C shows an example of the 3D image after the holes are filled in.

At S54, the processor 14 may rotate the 3D image to match an orientation of the base image. Where the base image is the stationary image, the rotation is to match the orientation with the stationary image. When one of the 3D images acquired while the person is moving is used as the base image, the rotation would be to match the orientation for the selected 3D image (base image). The rotation may be to match in different views. For example, the 3D images may be rotated such that the images are upright and face frontward. Figs. 6A-6E illustrate an example of the rotation in the different views. Fig. 6A illustrates an example of a front view of the predetermined section (prior to rotation). The line 600 shows that the central axis is not orthogonal to the ground. In this case, the person is leaning. This is evident by the x coordinates as shown in Fig. 6A. Fig. 6A shows the x-axis direction and the z-axis direction. For purposes of the description, Cartesian coordinates are used (defined by the x-axis, the y-axis, and the z-axis). The x-axis is the transverse or frontal axis, the y-axis is the sagittal axis and the z-axis is the longitudinal axis. However, the coordinate system is not limited to Cartesian and other coordinate systems may be used.

The curved arrow in Fig. 6A indicates the direction of rotation, e.g., clock-wise in this example. Fig. 6B illustrates an example of the rotated image in the front view.

Fig. 6C illustrates a side view of the predetermined section of the 3D image (prior to rotation). Fig. 6C shows the y-axis direction and the z-axis direction. As can be seen from line 600A, the person is leaning frontward. The curved arrow in Fig. 6C indicates the direction of rotation, e.g., clock-wise in this example. Fig. 6D illustrates an example of the rotated image in the side view.

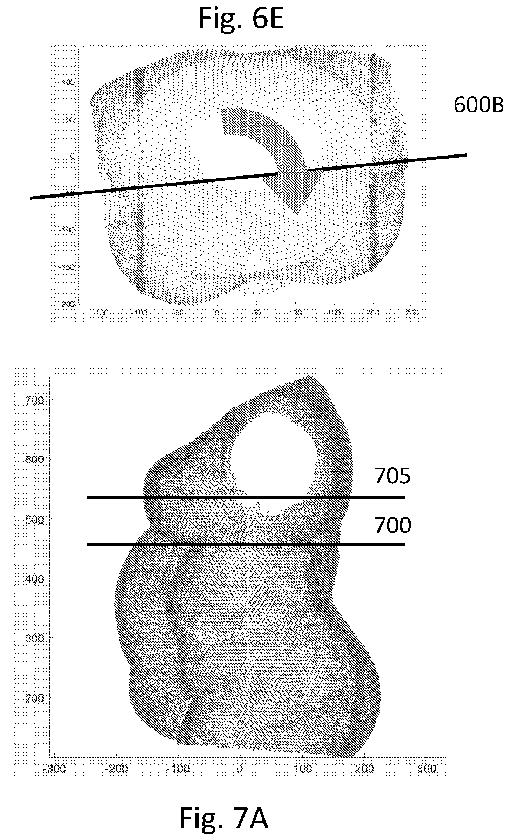

Fig. 6E illustrate a top view of the predetermined section of the 3D image (prior to rotation). Fig. 6E shows the x-axis direction and the y-axis direction. As can be seen from line 600B, the line 600B is not parallel to y=0 (e.g., a target orientation for this view). The curved arrow in Fig. 6C indicates the direction of rotation, e.g., clock-wise in this example.

For the base image, the 3D image may be rotated to a preset orientation. In some aspects, the orientation is facing front or back such that the coronal or frontal plane is orthogonal to the y-axis.

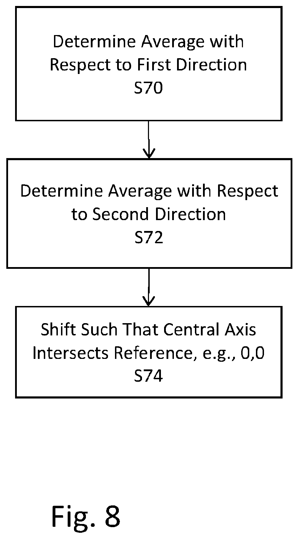

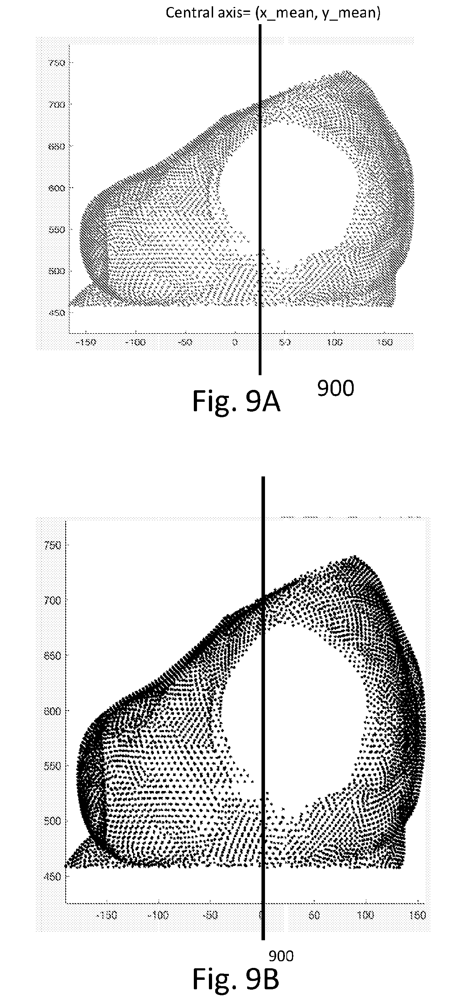

At S56, the processor 14 may define the central axis in the selected 3D image and shift the image if needed. Fig. 8 illustrates a method of defining the central axis and shifting the 3D image in accordance with aspects of the disclosure. In an aspect of the disclosure, the central axis is parallel to the longitudinal axis (orthogonal to the x-y plane). The processor 14 may determine an average with respect to a first direction (e.g., the x-direction). For example, the processor 14 may average the x-components of all the image points of the predetermined section (as processed above) to determine a first average value at S70. At S72, the processor 14 may determine an average with respect to a second direction (e.g., the y-direction). For example, the processor 14 may average the y-components of all the image points of the predetermined section (as processed above) to determine a second average value. The central axis can be defined as an axis intersecting the first average value and the second average value. An example of a central axis 900 is shown in Fig. 9A superposed on a processed 3D image (above the underbust level 700). Fig. 9A shows the y-axis direction and the z-axis direction. As can be seen, the central axis 900 does not interact the origin. For example. as shown in Fig. 9A, the central axis does not intersect Y=0.

At S74, the processor 14 may shift the predetermined section (as processed above) such that the central axis 900 can intersect a reference point, such as the origin. This effectively causes the average values (in the first direction and the second direction) to move to the reference point. For example, the processor 14 may shift the predetermined section (as processed above) horizontally such as shown in Fig. 9B until the central axis 900 is aligned with the x-component and the y-component of a (3D) reference point. In an example, the reference point can be an origin (e.g., coordinates (0, 0, 0)) of the 3D Cartesian coordinate system). Thus, the horizontal shifting can be performed to make the central axis 900 defined by the averaged x- coordinates and y-coordinates of all image points on the predetermined section (as processed above), aligned or coincided with x = 0 and y = 0. As shown in Fig. 9B, after shifting the central axis 900 intersects Y=0.

In some aspects, the processor 14 may shift the predetermined section (as processed above) such that the underbust line 700 align with the z-component of the reference point (e.g., Z=0). However, since the 3D images are going to be vertically shifted to align with other 3D images, this vertical shifting may be omitted.

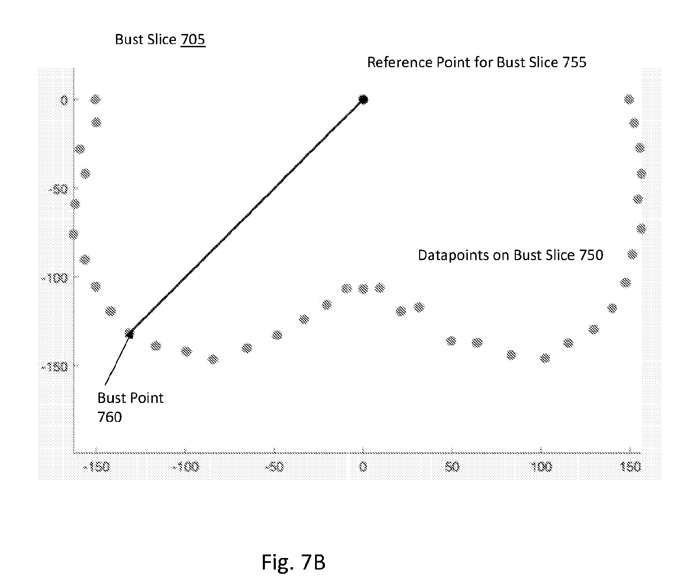

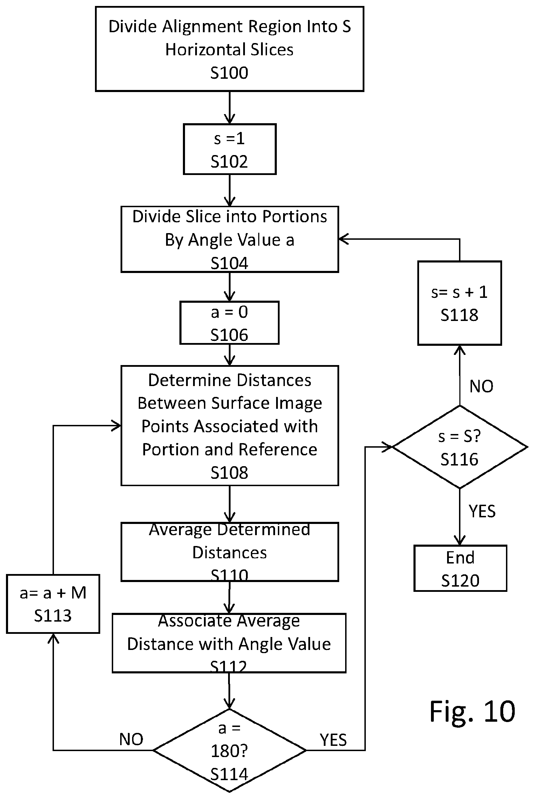

After the central axis is defined, the bust points may be determined as a local apex in the 3D image. Fig. 7A shows an example of a bust slice 705 determined from the local apex. The local apex may be defined as having a local maximum y-coordinate (absolute value). The local maximum may be identified by examining the y coordinates for different z-values. In an aspect of the disclosure, the bust points 760 may be determined for the left breast and the right breast at S58. In an aspect of the disclosure, the z-coordinate associated with the local maximum y-coordinate is recorded. Afterwards, the 3D image is sliced with a horizontal slice having the recorded z-coordinate, e.g., the bust slice 705. Fig. 7B illustrates an example of the bust slice 705. Datapoints for the bust slice 750 are defined to identify the x coordinately coordinate for the bust points 760. As illustrated in Fig. 7B, there may be a datapoint 750 every preset number of degrees on the bust slice 705. As described above, surface image points near a datapoint may have distances averaged to obtain the value for the datapoint 750. The distances between multiple surface image points and a reference point for the bust slice 755 are determined and averaged to define the value for the datapoint(s) in a similar manner as described below for the alignment region (see Fig. 10). The reference point for the bust slice 755 is the central axis projected onto the slice 705. The bust point 760 for a breast is defined as the datapoint 750 having the longest distance from the reference point 755 of the datapoints for the bust slice 750. Fig. 7B illustrates an example of the bust point 760 for the right breast. The bust point 760 will also be determined for the left breast.

At S60, the processor 14 may identify the underbust level 700. To determine the underbust level 700, in some aspects, the processor 14 may use an immediate crease of a protruded region (defined with respect to the bust point 760/bust slice 705) to identify the underbust level 700 such as shown in Fig. 7A. Fig. 7A shows an example of a left side image. The immediate crease may be identified by examining the y coordinates for the different z-values on the vertical slice parallel to the sagittal plane and passing through the x coordinate of the left bust point (or right bust point), respectively. The starting point for the z-value may be the height of the bust slice 705. The immediate crease may be an inflection point (e.g., point where the y value stops decreasing and then increases as the z value becomes lower). Image data below the underbust level 700 may be removed (e.g., not processed any further).

Once selected 3D image is preprocessed, the processor 14 may define datapoints in an alignment region. In an aspect of the disclosure, the alignment region may be the upper back area. The anterior body and the lower posterior body (including the hip) have more fat tissue which may undergo more displacement and shape change during movement, and thus may not be suitable to serve as the reference portion for the alignment. In addition, shoulders may have relative movement to the ribcage due to arm swing, therefore, the shoulder area may not be ideal for alignment either.

The datapoints are points on the surface of the alignment region of the 3D image. The datapoints may be a fixed number of datapoints P. In some aspect of the disclosure, P=1480, which is 37 datapoints per horizontal slice 1100 in the alignment portion and having 40 slices 1100.

Fig. 10 illustrates a method of determining the values for the datapoints in the alignment region in accordance with aspects of the disclosure using horizontal slicing. The processor 14 may partition the alignment region into S equally distributed horizontal slices at S100. In some examples, the horizontal slices can be orthogonal to the longitudinal axis of the body. The S horizontal slice can be arranged by their z-coordinates, such as from bottom to top or from s = 1 to s = S. For example, S may equal 40. However, the number of horizontal slices is not limited to 40 and 40 is for descriptive purposes only. Further, a fixed number of datapoints, such as 37 datapoints, can be identified on each horizontal slice in each image, e.g., 1 datapoint per 5 degrees (there may be a datapoint at both 0° and 180°). However, in other aspects of the disclosure, there may be more datapoints or less datapoint. In other aspects, there may be one datapoint per 10 degrees. Since these datapoints are being used for alignment purposes only, one datapoint per degree may not be needed. The number of slices and datapoints are merely one example and the other numbers (and angles) may be used.

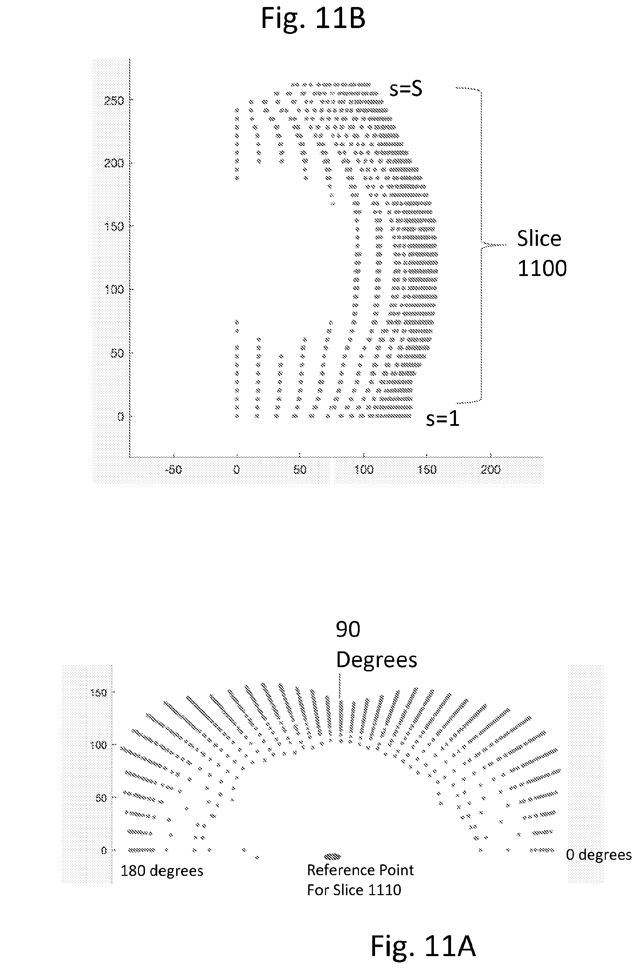

For example, to identify 37 datapoints, the processor 14 may identify the points on a horizontal slice from 0° to 180°, at angle increments of 5°, as shown in a Fig. 11A (which is a top view of Fig. 11B). In other words, starting from 0° to 180°, there may be one datapoint identified at every 5 degrees. For example, the 1st datapoint can be a datapoint i = 1 located at the bottommost slice s = 1, at the angle of 0°. The 37th datapoint is the datapoint i = 37 located on the bottommost slice s = 1, at the angle of 180°. The x-, y-, z-coordinates of the datapoints i can be determined by the processor 14 and recorded in sequence ranging from i = 1 to i = P, and the recorded locations or coordinates can be stored in the memory 16.

If a certain image point is missing in the alignment region, its coordinates can be defined or replaced by undefined values, such as not-a-number (NaN) values, to hold the space for the datapoint, and to maintain the sequence and indexing of other datapoints among i = 1 to i = P. The missing surface points can be a result of the removal of limbs (e.g., arms) during pre-processing (S59). At S102, the processor 14 may initialize a value of s to 1 to begin a sequence to identify the datapoints from the bottommost horizontal slice (s = 1). The processor 14 may include a counter to count the processed sliced. In other aspects, the processor may use a pointer or flag to identify the slice.

At S104, the processor 112 may partition or divide the horizontal slice s into a plurality of portions represented by an angle value a (the angle is described above). To improve an accuracy of the x-, y-, z-coordinates of the location of the datapoints, the instructions may define a threshold t corresponding to an angle tolerance of each datapoint within the horizontal slice 1100. In some aspects, the tolerance may be based on the number of datapoints. For example, for an angle value a = 40° (and datapoints every 5°), the threshold may be t = 2.5.

The processor 14 may partition each horizontal slice s into a plurality of portions based on a fixed angular interval defined by the angle value a and the threshold t. For example, each portion may range from an angle a-t to a+t. For example. the portion represented by the angle a = 40° may range from 37.5° to 42.5°, and the portion may include multiple image points. In other aspects, there may be a threshold to average points between horizontal slices 1100 to include in the value for the datapoints. For example, if there is a horizontal slice 1100 every z=5, then the z-tolerance may be +-2.5.

At S106, the processor 14 may initialize the angle value a to a=0°. At S108, the processor 14 may determine distances between images points along the horizontal slice s (at the surface) and a reference point 1110 for the horizontal slice (all image points at the angle and within the tolerance(s)). In an aspect of the disclosure, the reference point 1110 may be (x=0 and y=0 and the z value may change based on the slice). The reference point 1110, per slice, may be the projection of the central axis 900 on the slice. However, since the horizontal slice is two dimensional, the z value does not matter. At S110, the processor 14 nay determine an average of all the distances determined at S108. For each portion, the processor 14 may determine the distances of the multiple image points from the reference point 1110 for the slice and determine an average among these determined distances. At S112, the processor 14 may associate the datapoint to have the average distance determined at S110 for the angle value a. The value and associated angle (and slice) may be stored in the memory 16 as the datapoint. For example, for the datapoint associated with a = 40°, the processor 14 obtains the distances from image points between 37.5° to 42.5° (and values off-slice within the z-tolerance) and averages the same.

At S114, the processor 14 may determine whether the angle value a is 180° or not. In other aspects, instead of started at zero and moving up to 180° (counterclockwise), the process may start at 180 degrees may decrement to zero. If the angle value a is not 180° (NO at S114), the processor 14 may increment the value of a by M, where M is the angular difference between the datapoints (e.g., 0 ° +5 ° =5°) at S113 and the processor 14 may perform subsequently perform S108, S110, S112 and S114 for a next portion in the same horizontal slice. If the angle value a is 180° (YES at S114), the processor 14 may determine whether the horizontal slice s is the fixed number S (e.g., 40) at S116. If the horizontal slice s is not equal to S (NO at S116), then the processor 14 may increment s by one to at S118 and returns to S104 where the processor 14 may subsequently perform S106, S108, S110, S112, and S114 for a next horizontal slice (after S104). If the value of s is S (e.g., 40) at S 116, that means all horizontal slices are processed and process may end at S 120. In other aspects of the disclosure, the processing may begin with the highest number horizontal slice and work downward instead of beginning with horizontal slice s=1 and worked upward. Fig. 11B illustrates an example of the horizontal slices 1100 for the alignment region. Fig. 11A is a top view of Fig. 11B.

Once the datapoints are defined for the selected 3D image, the processor 14 may shift the selected 3D image to align the selected 3D image with the base image. For example, when the base image is the stationary image, the processor 14 may shift the selected 3D image with respect to the stationary image. For the stationary image, the processor 14 may execute S9 and S11 prior to getting to S13. When one of the selected 3D images in the subset is the base image, and the processing is for the first 3D image (e.g., the base image), S13 may be omitted in the first iteration as it is the base image. To determine the shift, the processor 14 first determines a shape discrepancy between the alignment region in the selected 3D image with the same portion in the base image using the defined datapoint. The shape discrepancy (also referred to herein as fit-loss) may be determined by a point wise comparison (same datapoint) in the respective 3D images.

Since the two 3D images for comparison have been pre-processed as described above (base image and the current selected 3D image), each point's distance from the origin (0,0,0) can be calculated by the following equation (Eq.1):

$$d_i = \sqrt{x_i{}^2 + y_i{}^2 + z_i{}^2} \qquad\qquad (1)$$

where, $(x_i, y_i, z_i)$ is the coordinates of the i-th datapoint among the scan-surface points (i ranges from 1 to P), and $d_i$ is the distance of the i-th point from the origin (0, 0, 0) or the reference point. If the coordinates of a point includes undefined (e.g., NaN) values, the distance of that point from the reference point will be recorded as NaN.

Based on the calculated distances from Eq. 1, a shape discrepancy between the pair of 3D images is given by the following equation (Eq.2):

$$L(d1, d2) = \frac{1}{m} \sum_{i=1}^{n} (d1_i - d2_i)^2 \qquad (2)$$

where d1, d2 represent two different 3D images, d1i refers to the i-th point on the first image (e.g., base image), while d2i refers to the same i-th point on the second image, e.g., current selected 3D image. The variable n is the total number of points, which in the examples described here, is P. Any value subtracting or being subtracted by a NaN value will result in an NaN value, but all the NaN values can be removed by the processor 14 before the addition. The variable m is the total number of pairs of points where both points do not include undefined values.

After the shape discrepancy is calculated, the current selected 3D image is shifted. For example, the current selected 3D image may be shifted vertically. The shifting changes the distance from the surface datapoints and the reference point in the current selected 3D image. The shape discrepancy is then calculated again as described above. The two shape discrepancies are compared. If the latter determined shape discrepancy is smaller than the former, the current selected 3D image is further shifted (as the 3D images are becoming more aligned) and a shape discrepancy is calculated. The process is repeated to minimize the calculated shape discrepancy.

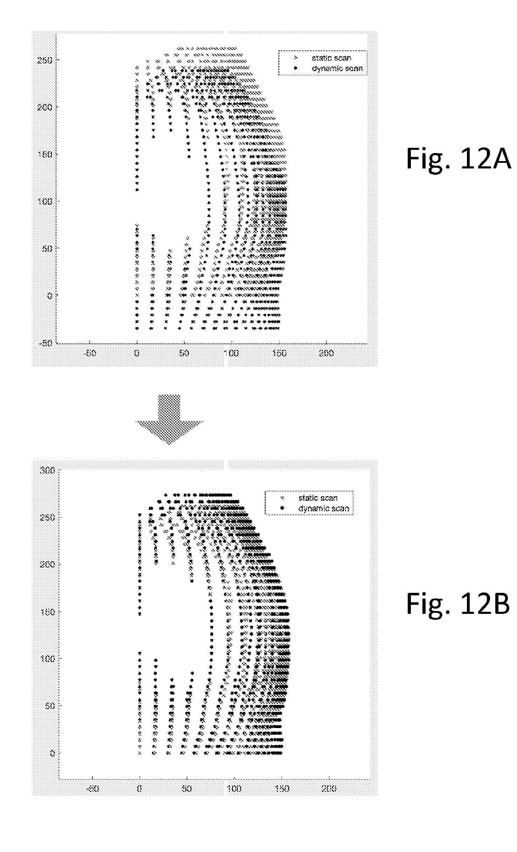

However, if the latter determined shape discrepancy is larger than the former, the shifting stops and may be returned to an earlier position or shifted in the opposite direction and the shape discrepancy is calculated again. Fig. 12A illustrates an example of images offset (not aligned) Fig. 12B illustrates an example of images aligned in accordance with aspects of the disclosure based on the alignment region. Figs. 12A and Fig. 12B show the y-axis direction and the z-axis direction. In Fig. 12A, the alignment region of the 3D image acquired while the individual is moving (dynamic scan) is lower than the alignment region of the 3D image acquired while the individual is stationary (static scan) and needs to be shifted upward to align. As noted above, the static 3D image may be replaced with one of the dynamic scan 3D images as the base image.

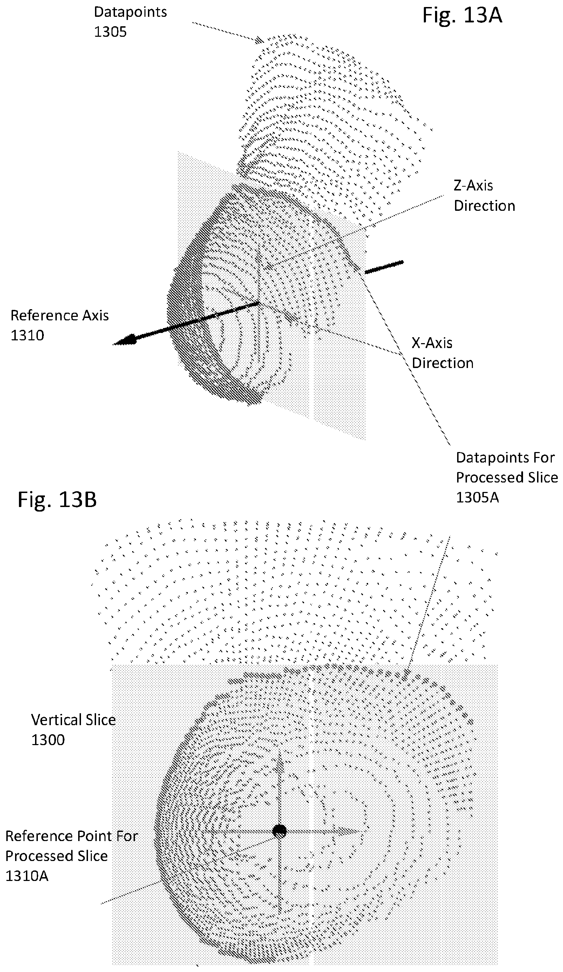

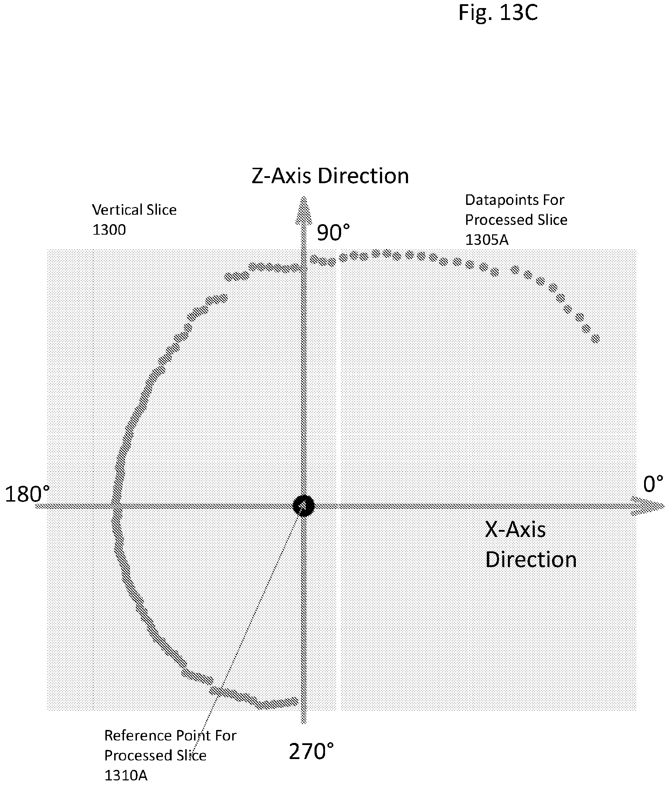

Once the current selected 3D image is aligned with the base image, the processor 14 may define the datapoints on the breasts at S15. In an aspect of the disclosure, the datapoint on the breasts (surface) may be defined using vertical slices. In some aspects of the disclosure, each breast may be separately processed to determine the datapoints. In some aspects of the disclosure, the vertical slices may be parallel to the coronal plane (frontal plane), e.g., have the same y value in its coordinate as shown in Fig.13A. Fig. 13A shows a perspective view of a sliced right breast (breast region) of an individual. A representative vertical slice 1300 is shown in Figs. 13A-13C. Each vertical slice may be equidistance from each other. The vertical slices may divide only the anterior region of the individual, e.g., y< 0 (or y>0 depending on the definition or direction of the y axis). Each of the dots in Figs. 13A-13C represent a defined datapoint for the right breast (breast region). Fig. 13A shows a reference axis 1310 for the breast region. The reference axis 1310 may be defined by the bust point 760 for the breast and is orthogonal to the x-axis direction and the z-axis direction. The reference axis 1310 in turn defines the reference point 1310A for each processed vertical slice. Figs. 13B and 13C shown an example of a reference point 1310A for a processed vertical slice. The reference point 1310A for the processed vertical slice may be the bust point 760 projected onto the vertical slice, e.g., processing slice 1300A (e.g., its x and z coordinate projected on a given y coordinate). Slicing the breast region this way allows each vertical slice to be regarded as quasi-circular. As shown in Fig. 13C, 0° and 180° may be defined on the x-axis direction and 90° and 270° may be defined on the z-axis direction. However, other angle definitions may be used.

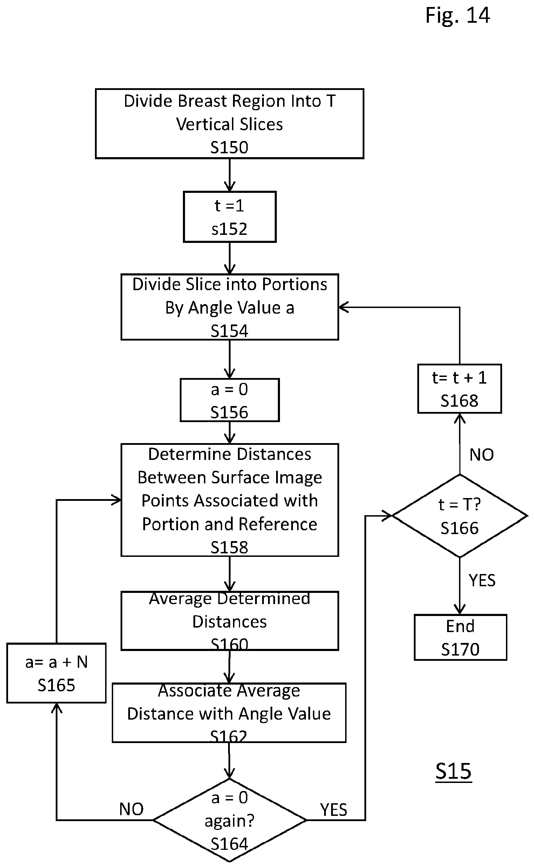

Fig. 14 illustrates a method of determining the values for the datapoints 1305 in accordance with aspects of the disclosure using vertical slicing as shown in Figs. 13A-13C. The processor 14 may partition one of the breast regions into T equally distributed vertical slices 1300 at S150. In some aspects of the disclosure, there may be 40 vertical slices. When the vertical slices are parallel to the coronal plane, the T vertical slices can be arranged by their y-coordinates, such as from back to front, e.g., from t = 1 to t = T. However, the number of vertical slices is not limited to 40 and 40 is for descriptive purposes only. Further, a fixed number of datapoints, such as 180 datapoints 1305A, can be identified on each vertical slice in each image, e.g., 1 point per 2 degrees. Therefore, in some aspects of the disclosure, there may be a total of 7200 datapoint 1305 (180 x 40). However, in other aspects of the disclosure, there may be more datapoints or less datapoints. In other aspects, there may be one datapoint per 5 degrees. In other aspects of the disclosure, depending on the boundary determination, e.g., only upper boundary, only datapoints on the upper breast may be determined, e.g., 0° to 180° (when the vertical slices are parallel to the coronal plane) (the determination at S164 is replaced with 180° rather than determining whether back at zero again.)

At S152, the processor 14 may initialize a value of t to 1 to begin a sequence to identify the datapoints 1305A from the innermost vertical slice (t = 1) (vertical slice closest to y=0). The processor 14 may include a counter to count the processed vertical sliced. In other aspects, the processor may use a pointer or flag to identify the vertical slice.

At S154, the processor 112 may partition or divide the vertical slice t 1300 into a plurality of portions represented by an angle value a. To improve an accuracy of the x-, y-, z-coordinates of the location of the datapoints 1305A, the instructions may define a threshold tt corresponding to an angle tolerance of each datapoint within the vertical slice. In some aspects, the tolerance may be based on the number of datapoints. For an angle value a = 40° and threshold tt = 1°, the processor 14 may partition each vertical slice t into a plurality of portions based on a fixed angular interval defined by the angle value a and the threshold tt, e.g., each portion can range from an angle a-tt to a+tt. For example, the portion represented by the angle a = 40° can range from 39° to 41°, and the portion can include multiple image points. In other aspects, there may be a threshold to average points between vertical slices 1300 to include in the value for the datapoints 1305A. For example, if there is a vertical slice 1300 every y=5, then the y-tolerance may be +-2.5.

At S156, the processor 14 may initialize the angle value a to a=0°. At S158, the processor 14 may determine distances between all images points along the vertical slice t (at the surface) and a reference point 1310A for the vertical slice (all image points may include image points at the angle and within the angle tolerance, as well as image point off-slice within the y-tolerance).

At S160, the processor 14 may determine an average of all the distances determined at S158. For each portion, the processor 14 may determine the distances of the multiple image points from the reference point 1310A for the vertical slice 1300 and determine an average among these determined distances. At S162, the processor 14 may associate the datapoint 1305A to have the average distance determined at S160 for the angle value a. The value and associated angle (and vertical slice) may be stored in the memory 16 as the datapoint 1305A. For example, the 1st datapoint can be a point i = 1 located at the innermost slice t = 1, at the angle of 0°. The 90th datapoint is the point i = 90 located on the innermost slice t = 1, at the angle of 178°. The x-, y-, z-coordinates of the datapoints i can be determined by the processor 14 and recorded in sequence ranging from i = 1 to i = Q (Q being the total number of datapoints), and the recorded locations or coordinates can be stored in the memory 16.

If a certain image point is missing on the slice, its coordinates can be defined or replaced by undefined values, such as not-a-number (NaN) values, to hold the space for the datapoint 1305A, and to maintain the sequence and indexing of other datapoints among i = 1 to i = Q. The missing points can be a result of the removal of limbs (e.g., arms) during pre-processing (S59) or the optional removal of the protrusion of the upper abdomen between the breasts (e.g., the lower and central area between the two breasts). For example, Fig. 13C shows no datapoints between 270° and 0° for the example vertical slice.

At S164, the processor 14 may determine whether the angle value a is 0° again. In other aspects, instead of started at zero and moving around the quasi-circle back to zero, (counterclockwise), the process may start at 360 degrees move clockwise. If the angle value a is not 0° again (NO at S164), the processor 14 may increment the value of a by N at S165, where N is the angular difference between the datapoints (e.g., 0 ° +2 ° =2°) and the processor 112 can perform the S158, S160, S162 and S164 for a next portion in the same vertical slice 1300. If the angle value a is 0° again (YES at S164), the processor 14 may determine whether the vertical slice t is the fixed number T (e.g., 40) at S166. If the vertical slice t is not equal to T (NO at S166), then the processor 14 may increment t by one to at S168 and return to S154. where the processor 14 may subsequently perform S156, S158, S160, S162, and S164 for a next vertical slice (after S154). If the value of t is T (e.g., 40) at S166, that means all vertical slices 1300 are processed and process may end at S170. In other aspects of the disclosure, the processing may begin with the outermost vertical slice and work inward instead of beginning with the innermost and working outward.

In Figs. 13A-13C the datapoints 1305A appears not to be uniform because the reference point 1310A is off center.

This process may be repeated for the other breast region.

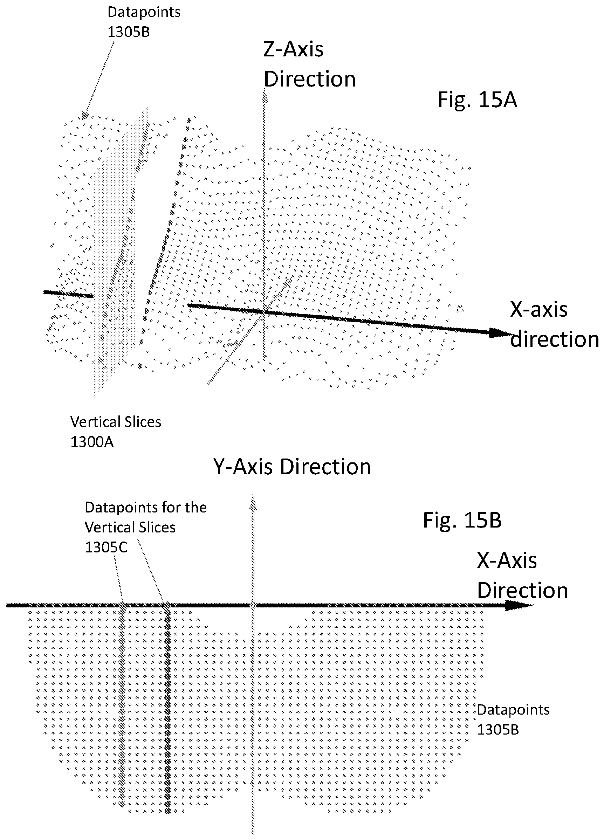

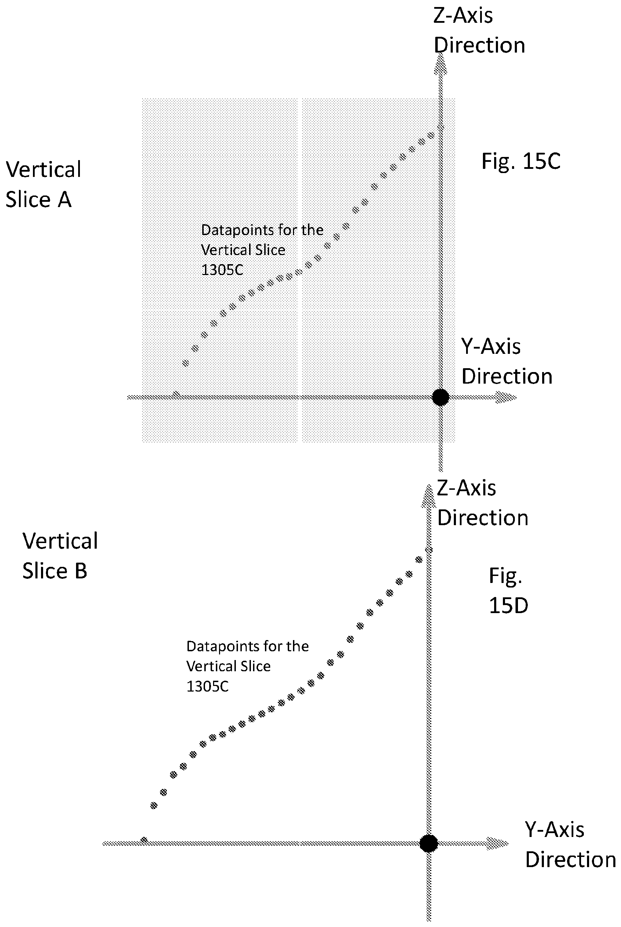

In some aspects of the disclosure, the vertical slices 1300A may be parallel to the sagittal plane, e.g., have the same x value in its coordinate as shown in Fig.15A and Fig. 15B. Fig. 15A shows two examples of vertical slices 1300A. Fig. 15A also shows an example of the datapoints 1305B defined in accordance with this vertical slicing (parallel to the sagittal plane). Each of the dots in Figs. 15A-15D represents a defined datapoint. Fig. 15A is a perspective view. Fig. 15B is a top view showing the datapoints 1305B and highlighting the datapoints for the two example vertical slices 1305C shown in Fig. 15A. In this aspect of the disclosure, two breast regions may be processed together (no need to separately process the same). Additionally, in this aspect of the disclosure, datapoints 1305B above the bust slice 705 may be separately processed from datapoints 1305B below the bust slice 705, since for a given y-value on a particular vertical slice there may be two z-values. Each vertical slice 1300A may be equidistance from each other. The vertical slices 1300A may divide only the anterior region of the individual, e.g., y < 0 (or y > 0 depending on the definition or direction of the y-axis). As shown in the figures a negative y value is in the anterior region.

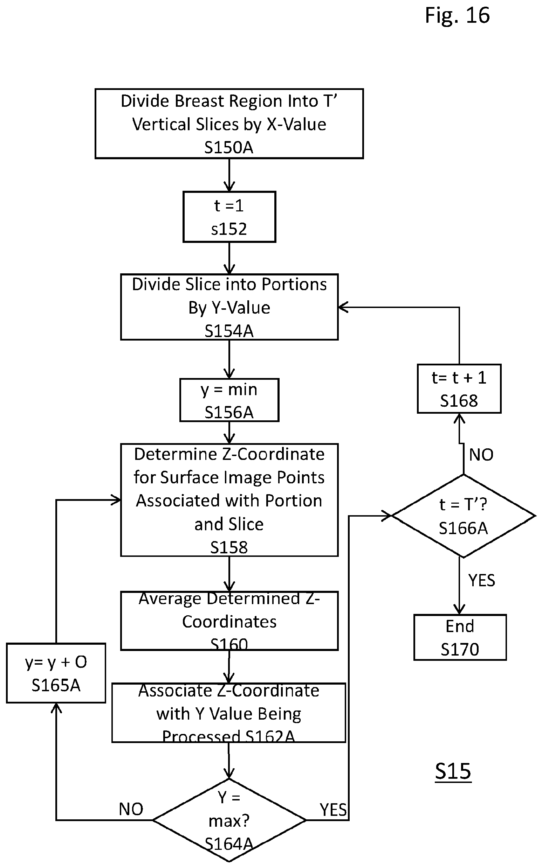

Fig. 16 illustrates a method of determining the values for the datapoints 1305B in accordance with aspects of the disclosure using vertical slicing (shown in Figs. 15A-15D). The processor 14 may partition the breast region into T' equally distributed vertical slices 1300A based on the x-value at S150A. In some aspects of the disclosure, there may be 60 vertical slices dividing both breasts. When the vertical slices are parallel to the sagittal plane, the T' vertical slices can be arranged by their x-coordinates, such as from left to right, e.g., from t = 1 to t = T'. However, the number of vertical slices is not limited to 60 and 60 is for descriptive purposes only. In some aspects of the disclosure, a fixed number of datapoints may be defined per vertical slice. In this aspect of the disclosure, the datapoints are defined by its y coordinate rather than angle. In some aspects, there may be 30 datapoints 1305B per slice. In other aspects, there may be a different number of datapoints for different slices depending on the shape of the region. For example, there may be more datapoints for slices in the middle of the breasts than between the breasts. The number of datapoints per slice is not limited to 30. Other number of datapoints may be used.

At S152, the processor 14 may initialize a value of t to 1 to begin a sequence to identify the datapoints 1305B from the vertical slice (t = 1) (vertical slice closest to the left or right). The processor 14 may include a counter to count the processed vertical slice. In other aspects, the processor 14 may use a pointer or flag to identify the vertical slice.

At S154A, the processor 112 may partition or divide the vertical slice t 1300A into a plurality of portions represented by y values. Each portion may be associated with a range of y-values. To improve an accuracy of the x-, y-, z-coordinates of the location of the datapoints (e.g., 1305C for vertical slice A), the instructions may define a threshold $t'''$ corresponding to an y-value tolerance of each datapoint within the vertical slice 1300A. In some aspects, the tolerance may be based on the number of datapoints for the vertical slice 1300A. The more datapoints 1305B per vertical slice 1300A, the smaller the threshold $t'''$ may be. For example, if there are datapoints every y=2, the y-value threshold $t'''$ may be +-1 (or +-0.5). Additionally, the portion may include image data off-slice (image data between the vertical slices 1300A). For example, if there is a vertical slice 1300A every x=5, then the x-tolerance may be +-2.5.

At S156A, the processor 14 may initialize the value to a minimum value (absolute value). For example, the minimum value may be y=0. At S158, the processor 14 may determine the z-coordinate for all images points associated with the portion identified in S154A (at the surface) and for the y value (datapoint that is currently being processed) (all image points may include image points at the specific y value and within the y tolerance, as well as image point off-slice within the x-tolerance) for the specific vertical slice.

At S160, the processor 14 may determine an average of all the z-coordinates determined at S158. For each portion, the processor 14 may determine the z-coordinates of the multiple image points for the vertical slice 1300A and determine an average among these determined z-coordinates. At S162A, the processor 14 may associate the datapoint 1305A to have the average z-coordinate determined at S160 for the y value for the datapoint (and the x value, which is known based on the vertical slice). The average z-coordinate and associated y- value (and vertical slice, e.g., x-value) may be stored in the memory 16 as the datapoint 1305B (e.g., datapoint 1305C for Vertical Slice A). The x-, y-, z-coordinates of the datapoints may be determined by the processor 14 and recorded in sequence ranging from i = 1 to i = R, and the recorded locations or coordinates may be stored in the memory 16 (where R is the maximum number of datapoints).

If a certain image point is missing on the vertical slice 1300A, its coordinates can be defined or replaced by undefined values, such as not-a-number (NaN) values, to hold the space for the datapoint 1305B, and to maintain the sequence and indexing of other points among i = 1 to i = R. The missing points can be a result of the removal of limbs (e.g., arms) during pre-processing (S59) or the optional removal of the protrusion of the upper abdomen between the breasts (e.g., the lower and central area between the two breasts).

At S164A, the processor 14 may determine whether the y value being processed is the maximum y value (absolute value). This indicates that all portions of the divided vertical slice have been processed. In other aspects, instead of started at y=minimum and moving counterclockwise, the process may start at y=maximum move clockwise (min and max absolute value). If the y value is not the maximum absolute y value (NO at S164A), the processor 14 may increment the value of y by O at S165A, where O is the y increment between the datapoints and the processor 14 can perform the S158, S160, S162A and S164A for a next portion in the same vertical slice 1300A. If the y value a is the maximum absolute y value (YES at S164A), the processor 14 may determine whether the vertical slice t is the fixed number T' (e.g., 60) at S166A. If the vertical slice t is not equal to T' (NO at S166A), then the processor 14 may increment t by one to at S168 and return to S154A. where the processor 14 may subsequently perform S156A, S158, S160, S162A, and S164A for a next vertical slice (e.g., vertical slice B). If the value of t is T' (e.g., 60) at S166A, that means all vertical slices 1300A are processed and process may end at S170.

In other aspects, the vertical slices any be angled with respect to both the coronal plane and the sagittal plane.

S15 is repeated for the base image (whether the base image is the 3D image acquired while the individual is stationary or one of the 3D images acquired while the individual is moving). In an aspect of the disclosure, the same vertical slicing technique (whether parallel to the coronal plane or sagittal plane or angled) may be used for the base image. This will allow for consistency in the datapoints. This way the base image and the current processed 3D image have the same number of defined datapoints.

At S17, the processor 14 may determine the vertical displacement for the 3D image being processed (3D image acquired while the individual is moving) with respect to the base image. The vertical displacement may be determined for each defined datapoint in S15 (point-wise). The vertical displacement compares the z-coordinates in the defined datapoints (same points in the base image and the current processed 3D image), e.g., relative vertical displacement. The displacement may be determined using the following equation.

$$d_j = z_{ij} - z_{i0} \tag{3}$$

where $d_j$ is an array containing the vertical displacements of all the defined datapoints for the jth 3D image (the current processed 3D image), where j is $1 \leq j \leq N$, where N is the number of three-dimensional images in the subset, $z_{ij}$ is the z-coordinate of the i-th defined datapoint of that jth 3D image ($1 \leq i \leq M$), where M is the number of defined datapoints, while $z_{i0}$ is the z-coordinate of the i-th point of the three-dimensional image for the base image.

The displacement array may be stored in the memory 16 (associated with the current processed 3D image).

At S19, the processor 14 may determine if all the 3D images in the subset have been processed. For example, since a counter may be used to track the processed 3D images, the processor may determine whether the counter value equals the number of 3D images \in the subset. When there are unprocessed 3D images in the subset (NO at S19), the processor 14 may increment the counter at S20 and the processor 14 executes S9-S19 for the next 3D image acquired when the individual is moving.

When all the 3D images in the subset are processed (YES at S19), the processor 14 may calculate a displacement parameter at S21. In some aspects of the disclosure, the displacement parameter may be a standard deviation.

Once again, the displacement parameter may be calculated for each defined datapoint in S15.

The displacement parameter may be calculated using the following equation:

$$SD = \sqrt{\frac{\sum(d_j - d_{avg})^2}{n-1}} \qquad (4)$$

where SD represents the standard deviation of $d_j$, $d_{avg}$ is the mean value of $d_j$, and $n$ is the number of 3D images in the subset (or if one of the 3D images acquired while the individual is moving is selected as the base image, n is the remaining number of 3D images in the subset).

In an aspect of the disclosure, the processor 14 may generate a mapping, such as a heat map at S23 using the displacement parameter calculated at S21. For example, the heat map may be superposed over the base image (such as the 3D image acquired while the individual was stationary or the one of the 3D images acquired while the individual was moving). Since, the x, y, and z coordinates for each of the datapoints in the breast region were defined in S15 (for the base image as well), the processor 14 knows the position of the corresponding datapoints associated with the determined displacement parameter. In some aspects of the disclosure, the heat map may be displayed on the display 18. In some aspects, the server 40 may transmit the determined heat map to the client 50 to display the heatmap on the display 18 (of the client 50).

In some aspects, the heat map may be presented by gradient colors. The dark blue color may correspond to minimal variability in vertical displacement, whereas the dark red color may correspond to maximal variability in vertical displacement (or vice versa). In other aspects, other colors may be used to differentiate the variability.

In some aspects, the heat map may use a gray scaling to represent that variability in the vertical displacement. For example, dark grey scale image may represent maximal variability whereas light grey scale may represent minimal variability.

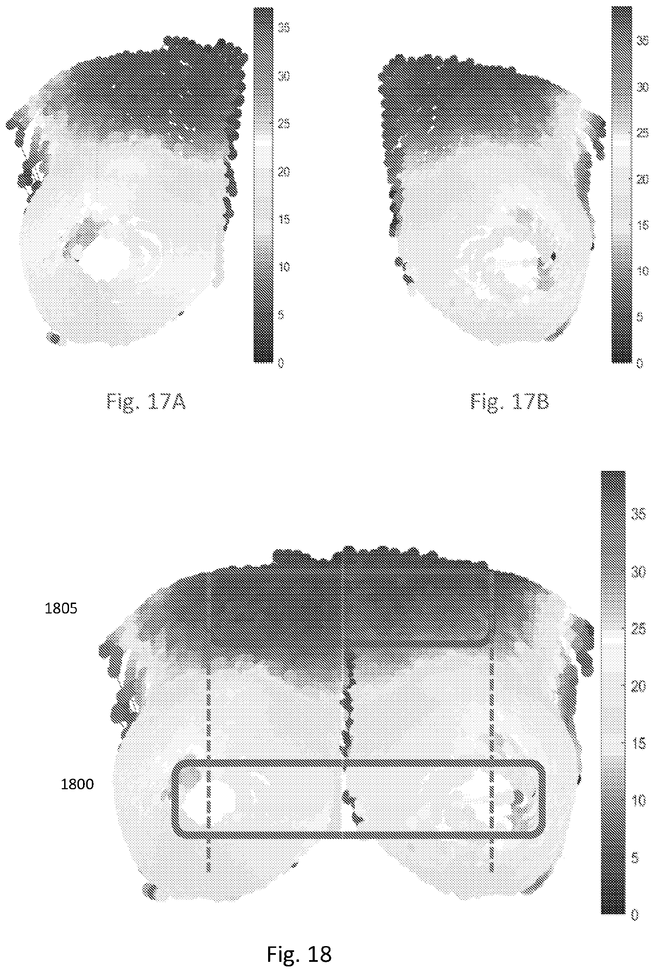

In some aspects of the disclosure, the heat map may be separately displayed for the different breast (right and left separately). This may be particularly used where the breasts are separately processed via the vertical slicing (where vertical slices 1300 parallel to the coronal plane are used). Figs. 17A and 17B illustrate an example of a heat map superposed over the right breast (Fig. 17A) and the left breast (Fig. 17B).

At S25, the processor 14 may determine a threshold for separation of the breasts from the chest (chest wall). In an aspect of the disclosure, the memory 16 may store a preset percentage. The preset percentage may be a fixed percentage of variability. The preset percentage may be multiplied with a difference in the average standard deviation of the displacement in two different areas to determine the threshold. The processor 14 may define the first area 1800 and the second area 1805 at S25. The first area 1800 may be the bust area. This first area 1800 may be associated with the highest variability in the displacement. The bust slice 705 has already been determined. In an aspect of the disclosure, the height of the first area 1800 may be preset, e.g., +- Z value of the bust slice 705. In other aspects, the height of the first area 1800 may be adjusted based on the heat map to keep the highest x percentage displacement within the first area. The width of the first area (e.g., in the x direction may be determined by using a set percentage of the points. For example, that percentage may be the 10% to 90% of the x points. For example, if there are 100 points, then the width may include the middle 80 points (not including the first and last 10 points). The second area 1805 may be a low displacement area. The second area 1805 may exclude the armhole area (which may have high variability of displacement). The width of the second area may be defined by the x-coordinate of the left bust point and right bust point as determined above. Thus, the second area 1805 may be narrower than the first area 1800, an example of which are shown in Fig. 18. The vertical dash lines in Fig. 18 intersect the bust points 760.

Once the areas are defined, the processor 14 may calculate the average of the standard deviation for all datapoints in the first area to obtain "A' and calculate the average of the standard deviation for all datapoints in the second area to obtain "B". The processor 14 may calculate the difference D (D= A-B). The processor 14 may then determine the threshold by multiplying the predetermined percentage times the difference D. The threshold may identify the upper boundary of the breasts.

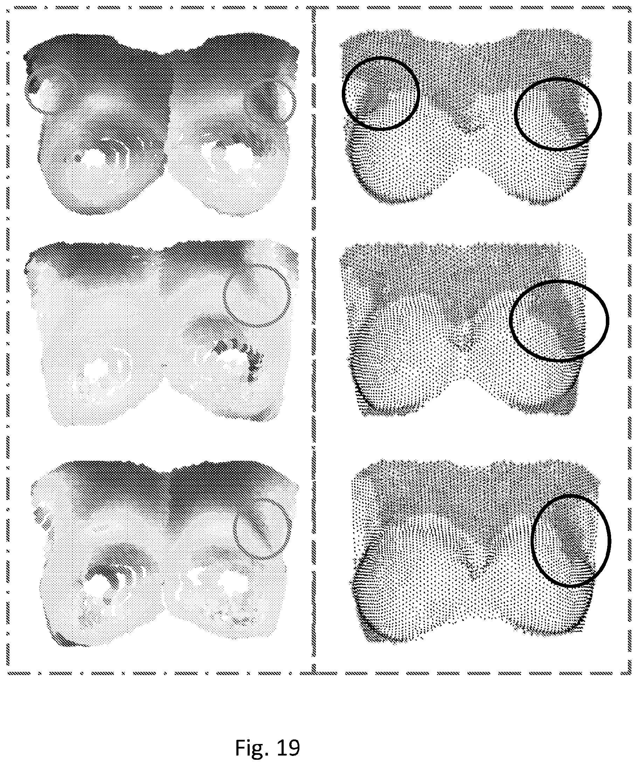

The connecting area between the bra cup and the shoulder strip (as circled in Fig. 19) can restrict the upward movement of the breast to a higher extent than other parts of the bra can, resulting in a lower SD value for the relative vertical displacement in that area. This is way the second area 1805 may be narrower than the first area 1800 (e.g., avoiding the shoulder strip area).

At S27, the processor 14 may separate the breasts from the chest using the base image (e.g., the 3D image acquired while the individual was stationary or one of the 3D images acquired while the individual was moving).

In the base image, the image data below the underbust line 700 is already removed, image data in the posterior region (e.g., $y > 0$) (or $y < 0$ depending on the definition or direction of the y-axis) may already be removed. Thus, at S29, the processor may separate the remaining image data using the determined threshold and the standard deviation values for the datapoints (and heat map). For example, in some aspects of the disclosure, datapoints having the standard deviation below the threshold (determined at S25) may be removed and the remaining datapoints identified as breast datapoints. The remaining datapoints may be displayed on the display 18. In some aspects, the server 40 may transmit the 3D image of the breasts to the client 50 to display on the display 18 (of the client 50). In some aspects, the heat map only containing values associated with the breast datapoints may be superposed on the 3D image of the breasts.

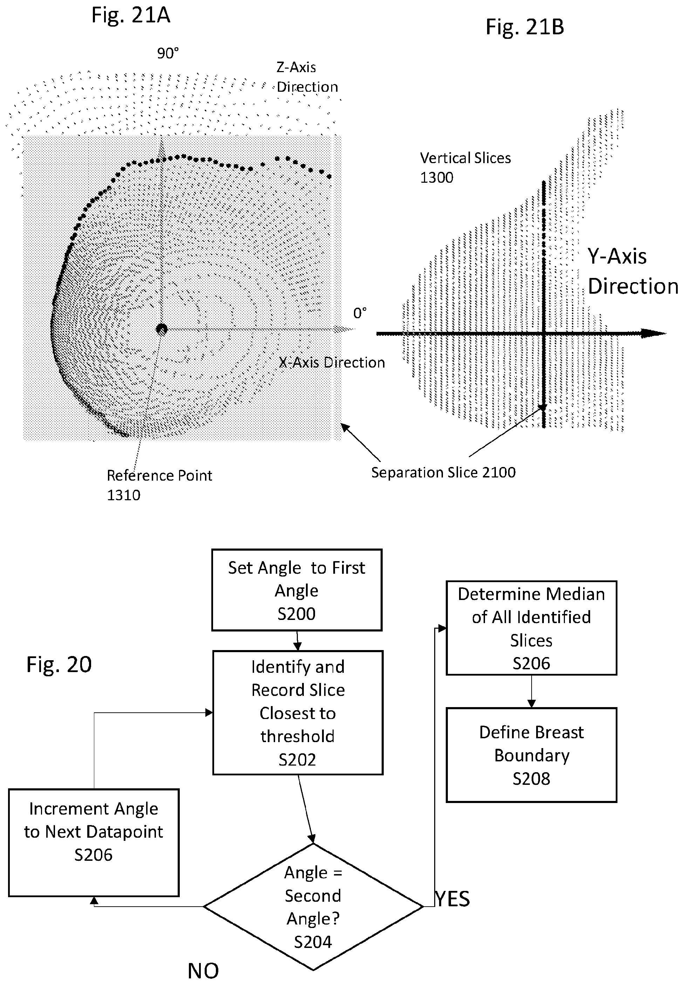

In other aspects of the disclosure, the breasts may be separated based on the vertical slices 1300 or y-value separation. The method of determining the separation vertical slice or y value may be different depending on the direction of the vertical slicing. Fig. 20 illustrates a method of determining the separation vertical slice in accordance with aspects of the disclosure. This method may be used when the datapoints are defined with vertical slices 1300 parallel to the coronal plane. In this aspect of the disclosure, the separation slice may be determined for each breast separately.

In accordance with aspects of the disclosure, for angles within a range, the slice (for the angle) having the standard deviation value closest to the threshold determined at S25 (separation) is identified. The identified slices for all the angles within the range are sorted and the median is determined, and the median slice is selected as the separation vertical slice. In some aspects of the disclosure, the angle may be 0° to 90°. However, the maximum angle may change depending on when the individual is wearing a bra with straps or not.

At S200, the processor 14 may set the angle for processing to the first angle. For example, the processor 14 may set the angle to zero. Fig. 21A shows the orientation for the angles. An angle of 0° is parallel to the x-axis. An angle of 90° is parallel to the z-axis.

At S202, the processor 14, for the processing angle (e.g., 0°), identifies all the SD values for each of the vertical slices (e.g., 40) associated with the datapoint. Each of the SD values is compared with the threshold determined in S25. The vertical slice having the SD value closest to the threshold is recorded (for the datapoint for the processing angle) and stored in the memory 16. At S204, the processor 14 may determine if the current processed angle equals the second angle, e.g., 90°. Since this is the first iteration, the determination is NO. The processor 14 may increment the processing angle to the angle associated with the next datapoint at S206. As described above, there may be a datapoint every 2° and thus the processing angle would now be 2°. S202 and S204 may be repeated for each datapoint between the first angle and the second angle. Using the above example, there may be 46 datapoints between the first angle and the second angle.

For example, at 0°, the processor 14 may determine that vertical slice 32 is the closest and at 2°, the processor 14 may determine that vertical slice 36 is the closest to the threshold...and at 88°, the processor 14 may determine the vertical slice 40 is the closest to the threshold.

Once all the angles between the first angle and the second angle are processed, the processor 14 may determine that the angle equals the second angle (YES at S204) and the processor 14 sorts all the determined vertical slices per angle in lowest to highest order or vice versa to determine the median vertical slice of all identified slices. The median vertical slice is then identified as the separation slice 2100 at S208. An example of the separation slice 2100 is shown in Figs. 21A and 21B. In an aspect of the disclosure, when there are an even number of vertical slices, the separation slice 2100 may be defined by taking an average of the two vertical slices closest to a middle number of identified slices. For example, if the middle two identified slices are the 34th and 35th slice. A new slice having a y-coordinate midway between the y-coordinates for the 34th and 35th slice, respectively, may be used as the separation slice.

At S27, the processor 14 may separate the breasts from the chest using the base image using the separation slice 2100.

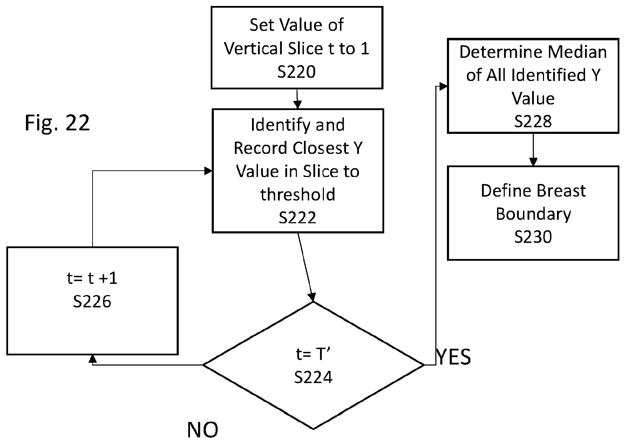

In other aspects of the disclosure, the breasts may be separated from the chest using a determined y-value. Fig. 22 illustrates a method of determining the separation y value in accordance with aspects of the disclosure. In accordance with this aspect of the disclosure for each vertical slice $t=1$ to $t=T'$, the y value closest to the threshold is identified and then sorted by y-value and the median of all identified y values is determined. The median identified y-value is defined as the separation y-value. This method of determining the separation y value may be used when the vertical slicing method uses vertical slices parallel to the sagittal plane.

At S220, the processor 14 may set the vertical slice 1300A for processing to a first slice, e.g., $t=1$.

At S222, the processor 14, for the processing vertical slice (e.g., $t=1$), identifies all the SD values for datapoints, respectively associated with a y-value. Each of the SD values is compared with the threshold determined in S25. The y-value associated with the SD value closest to the threshold is recorded and stored in the memory 16 associated with the processing vertical slice. At S224, the processor 14 may determine if the current processed vertical slice equals the maximum number of slices T', e.g., 60. Since this is the first iteration, the determination is NO. The processor 14 may increment the processing vertical slice to the next vertical slice at S226 (t=t+1). S222 and S224 may be repeated for each vertical slice 1300A. Using the above example, there may be 60 slices and thus, there may be 60 determined y values as being closest to the threshold (one per vertical slice).

For example, at slice X=25, the processor 14 may determine that y value 54 is the closest to the threshold, the processor 14 may determine that vertical slice X=20, the y value 59 is the closest to the threshold... and at vertical slice X=0, the processor 14 may determine that y value 39 is the closest to the threshold.

Once all the vertical slices 1300A are processed, the processor 14 may determine that t=T' (YES at S204) and the processor 14 may sort all the determined y values in lowest to highest order or vice versa to determine the median y value of all identified y values at S228. The median y value is then identified as the separation y value at S230. In an aspect of the disclosure, when there are an even number of defined y-values, the separation y value may be defined by taking an average of the two y-values closest to a middle number of identified y-values. For example, if the middle two identified y-values are 11 and 12, a separation y-value may be a y-value of 11.5.

At S27, the processor 14 may separate the breasts from the chest using the base image using the separation y value.

The separated breasts may be subsequently displayed on the display 18 as described above.

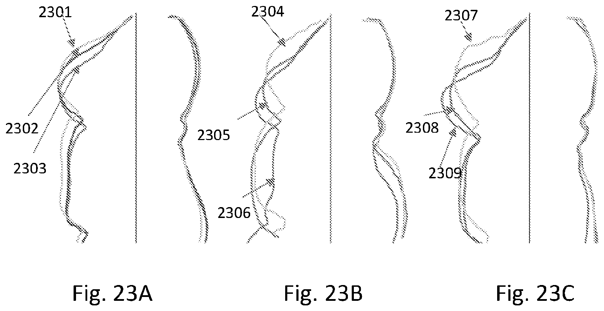

Figs. 23A-23C illustrate an example of the vertical displacement for three different body types where the 3D images are aligned in the alignment region in accordance with aspects of the disclosure. In each of the figures (Fig. 23A-23C), three different images are shown (e.g., 2301-2303 in Fig. 23A), (2304-2306 in Fig. 23B) and (2307-2309 for Fig. 23C). The observation is of the sagittal plane at the right bust point. As can been seen, the three different body types produce three different vertical displacements.

In other aspects of the disclosure, the time series analysis of the vertical displacement and subsequent threshold determination may be used to generate a cup size recommendation for the individual.

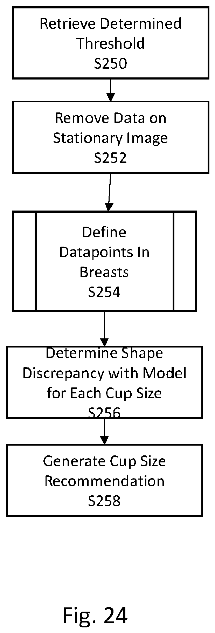

Fig. 24 illustrates an example of a method for generating a cup size recommendation in accordance with aspects of the disclosure. The method uses the previous determined threshold (at S25) to determine how to separate the breast from the chest. At S250, the processor 14 may retrieve the determined threshold from memory 16. At S252, the processor 14 may remove the image data to separate the breast from the chest. In an aspect of the disclosure, this may be done on the 3D image acquired while the individual is stationary. In an aspect of the disclosure, when the generating the cup size recommendation occurs immediately after or shortly after S25/S27, S250 and S252 may be omitted as the breast may be already separated.

At S254, the processor 14 may define the datapoints in the breasts (after separation). In an aspect of the disclosure, the datapoints may be defined using horizontal slicing in a similar manner as described above for defining the datapoints in the alignment region (see Fig. 10). At S100, instead of dividing the alignment region into S horizontal slices, the processor 14 may divide the separated breasts into the horizontal slices. The same or different number of slices may be used. The angle increments for the portions may be different. For example, for each horizontal slice, there may be a datapoint every 2°. Additionally, the initial angle (at S106) and final angle (all angles processed) (at S114) may be different as the breasts are on the anterior of the individual, whereas the alignment region is on the posterior. In some aspects, the initial angle may be 180° and the final angle may be 0° (and increments moving counterclockwise). This angle orientation is consistent with shown in Fig. 11A. In other aspects, the angles may be reorientated since the breasts are only on the anterior portion. Therefore, the angles may be redefined to 0° and 180° or -180° (or any other 180 degrees range). The remaining steps are similar and will not be described again in detail. A description of defining datapoints on the breasts using horizontal slicing is described in PCT application Serial No. US2020/54172 filed October 3, 2020, which is incorporated herein by reference.

In an aspect of the disclosure, the y coordinate for the reference point for each slice may be the y coordinate of the separation slice or the y separation value. In some aspects, the value may be recentered such that it intersects the origin (y=0). In an aspect of the disclosure, the x coordinate for the reference may intersect the central axis 900. The z- coordinate is the z-value of the horizontal slice.

In other aspects of the disclosure, the datapoints defined in S15 (vertical slicing) may be used.

At S256, the processor 14 may determine a shape discrepancy with a model associated with each cup size. In an aspect of the disclose, each cup size has its own model (prototype). The model is a representative size for the specified cup size. The 3D image of each model acquired while the model is stationary may be processed as described above to define the datapoints for the breasts. Additionally, the boundary of the breasts in each model maybe defined as described above.

For each model (cup size), the processor 14 may calculate the shape discrepancy using equations 1 and 2. In equation 2, $d1i$ refers to the i-th point on the 3D image for the model for a specific cup size (acquired while the model is stationary), respectively, while $d2i$ refers to the same i-th point on the 3D image acquired while the individual is stationary. Therefore, S256, the processor may determine CS different shape discrepancies, where CS is the number of different cup size models.

After all the shape discrepancies are calculated, the processor 14 may compare the values. Based on the comparison, the processor 14 may identify the lowest shape discrepancy. The lowest shape discrepancy may indicate that the individual breast size is most similar to the model 3D image that resulted in the lowest shape discrepancy.

At S258, the processor 14 may generate a recommendation for the cup size based on the lowest shape discrepancy. In some aspects, the processor 14 may identified the cup size associated with the lowest shape discrepancy and issue a recommendation. In some aspects, the recommendation may be displayed on display 18. In some aspects, where there is a server 40/client 50 relationship, the server 40 may transmit the recommendation to the client 50 via the communication interfaces 45/55, respectively for display on the display 18 at the client 50. For example, when an individual would like to have a size recommendation, the individual may use their own personal devices to acquire the 3D images and transmit the same to the manufacturer for the above processing and recommendation. The manufacturer may perform the above-identified functions and transmit the recommendation back to one of the individual's personal devices. In some aspects, the recommendation may be emailed or texted to the individual. In some aspects, the recommendation may be in the form on a report containing one or more of the scanned 3D images.

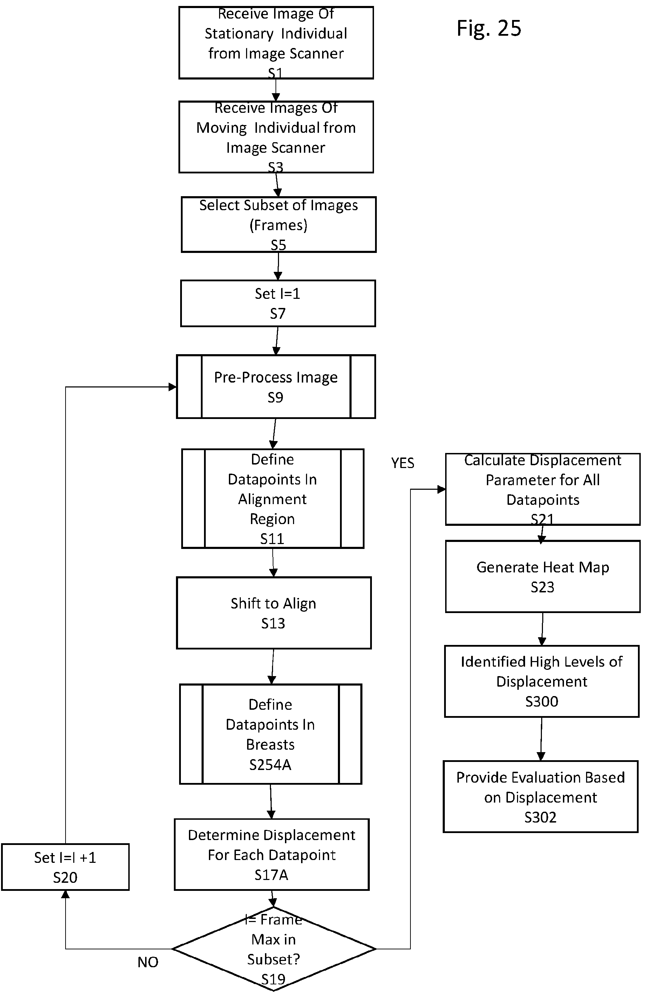

In other aspects of the disclosure, displacement between acquired 3D images may be used to evaluate the performance of a garment. Fig. 25 illustrates an example of a method for evaluating the performance of a garment in accordance with aspects of the disclosure. The garment may be a bra, such as a sports bra or a shirt, such as a form fit shirt. A goal of a sports bra is to restrict displacement of the breasts to reduce breast pain and discomfort during physical activities. Additionally, when there is a high displacement, it may be an indication that the bra or garment is too big or does not properly fit. Many of the features illustrated in Fig. 25 are similar as described above and will not be described again in detail. Similar to above, the method may comprise receiving the 3D images (S1 and S3). In this case, the 3D images are acquired while the individual is wearing the same garment, e.g., sports bra. Like above, one of the 3D images is a base image for comparison to determine the displacement. The base image may be a 3D image acquired while the individual is stationary (e.g., S1). Also, the base image may be one of the 3D images acquired while the individual is moving (e.g., S3). If the base image is one of the 3D images acquired while the individual is moving S1 may be omitted.

At S5, a subset of the 3D images acquired while the individual is moving is selected for further processing. When one of the 3D images acquire while the individual is moving is the base image, the selection also includes setting the base image. A description of selecting the subset of 3D images is described above. Features S9-19 are performed for each of the selected 3D images. A counter may be used to track the current 3D image being processed. The counter may be initialized to 1 at S9. When a 3D image acquired while the individual is stationary is the based image S9 and S11, S254A are performed for the 3D image. Since the base image is used for comparison, S13 may be omitted because the other 3D images are aligned with the base image at S13. When one of the 3D images while the individual is moving is set as the base image, S13 and S17A may be omitted for the first iteration (e.g., for the selected 3D image as the base image).

At S254A, the datapoints may be defined for the breasts (breast region). This is performed on each of the 3D images in the subset (and if the 3D image acquired while the individual is stationary is used as the base image, datapoints may be defined on the 3D image acquired while the individual is stationary). Once the 3D images are aligned, the processor 14 may separate the anterior region from the posterior region (at y=0). The breasts are located at the anterior region. Also, in S9 the underbust is identified, image points below the underbust had already been removed. Therefore, S254A the processed 3D image is bound by the underbust in the z direction and y=0 in the y direction. Since the body is divided into posterior and anterior, the anterior portion has 180 degrees. The x-axis may be identified as 0° and 180°, however other angles may be used.

The breasts may be divided using horizontal slicing in a similar manner as described in Fig. 10. Each image is divided into the same number of horizontal slices for comparison. In some aspects, there may be 50 horizontal slices. The distance between each slice may be the same. Each horizontal slice may have a predetermined number datapoints. For example, there may be a datapoint for each degree such that each horizontal slice has 181 datapoints (including both endpoints). Therefore, if there are 50 horizontal slices where each slice as 181 datapoints, there may be a total of 9050 datapoints. The reference may be the central axis 900 projected onto the horizontal slice (for average distance determination as described above). Once the datapoints are defined for a 3D image (and the base image), the processor may determine the displacement at S17A. In this case, instead of vertical displacement (z direction), the displacement, in the x and y direction, is determined. This is to determine the shape change (shape deformation) as the individual is moving such as running. The displacement may be determined using the following equation

$$d'_j = \sqrt{x_{ij}^2 + y_{ij}^2} - \sqrt{x_{i0}^2 + y_{i0}^2} \qquad (5)$$

where $d'_j$ is an array containing the distances from the reference point for each of the datapoints for the $j$-th 3D image

($1\leq j \leq$ N), where N is the number of 3D images in the subset (non-base images), $x_{ij}$ and $y_{ij}$ is the x-coordinate and y-coordinate, respectively, of the $i$-th point of that 3D image ($1\leq i\leq$ P), where P is the total number of datapoints while $x_{i0}$ and $y_{i0}$ is the x-coordinate and y-coordinate, respectively, of the $i$-th point of the base image (of the same individual) ($1\leq i\leq$ P). The defined z-coordinate may be ignored when determining the displacement.

Once all the 3D images in the subset are processed (and the 3D image acquired while the individual is stationary, if used) (YES at S21), the processor 14 may calculate the displacement parameter for each datapoint at S21. Similar to above, the displacement parameter may be a standard deviation calculated using equation 4.

In an aspect of the disclosure, the processor 14 may generate a mapping, such as a heat map using the displacement parameter calculated at S21. For example, the heat map may be superposed over the base image (such as the 3D image acquired while the individual was stationary or the one of the 3D images acquired while the individual was moving).

In some aspects of the disclosure, the heat map may be displayed on the display 18. In some aspects, the server 40 may transmit the determined heat map to the client 50 to display the heat map on the display 18 (of the client 50).

In some aspects, the heat map may be presented by gradient colors. The dark blue color may correspond to minimal variability in displacement (low shape change), whereas the dark red color may correspond to maximal variability in displacement (high shape change) (or vice versa). In other aspects other colors may be used to differentiate the variability.

In some aspects, the heat map may use a gray scaling to represent that variability in the displacement (shape change). For example, dark grey scale image may represent maximal variability whereas light grey scale may represent minimal variability.

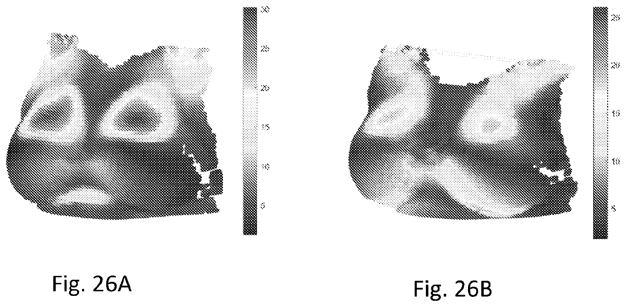

Figs. 26A and 26B illustrate two examples of the heat map. At S300, the processor 300 may identify areas in the heat map with a high level of variability in the displacement. This may be based on a threshold. This threshold may be stored in advance. In an aspect of the disclosure, the threshold may be set by the manufacturer of the garment. This threshold may be an expect variability in the displacement.

In other aspects of the disclosure, the determination may be relative to the individual. For example, the processor 14 may calculate the average of the SD for all datapoints and determine another SD of the average and identify datapoints based on another SD. Looking at the two example heat maps in Fig. 26A and Fig. 26B, one in Fig. 26A has a higher variability in the upper breast region than in Fig. 26B. However, the lower breast region in Fig. 26B has a high variability than in the same region in Fig. 26A.

At S302, the processor 14 may generate an evaluation report based on the analysis of the variability in the heat map. For example, the evaluation report may include recommendations for designing the garment. Using the example in Fig. 26A, the evaluation report may indicate a high level of variability in the upper region of the breasts with a recommendation to include additional support in that region. This indication may include the specific amount of the variability and the datapoints associated with the high variability. Additionally, the indication may include a percentage of the datapoints having the high variability. This may be determined by identifying the total number of datapoints having the variability above the threshold and dividing the same by the total number of breast datapoints (multiplying by 100).

Using the example in Fig. 26B, the evaluation report may indicate a high level of variability in the lower region of the breasts with a recommendation to include additional support in that region.

In some aspects, the analysis may also indicate that the garment does not properly fit. For example, in a case where there is a high level of variability throughout the breasts, this may indicate that the bra does not properly fit.

In some aspects, the method described in Fig. 25 may be used when the manufacturer is designing the garment. The method may be performed for the fit models for each cup size or garment size to confirm the garments performance for any/all sizes.

The heat maps may also be used to observe patterns in the variability of the displacement among different sizes and body shapes. For example, it may be expected that upper breasts have the most variability in shape deformation. However, the pattern may be used to develop variability thresholds. The heat maps may be used to determine the effect of certain materials such as restraints and supports including wires and straps in different areas.

In some aspects of the disclosure, the method described in Fig. 25 may be executed twice for the same individual, once where the individual is nude and a second time where the individual is wearing a garment such as a sports bra. The heat maps that are generated at S23 may be displayed on the display, side-by-side for comparison. In an aspect of the disclosure, the difference between the SD values for each datapoint may be determined and displayed as a separate heat map. In an aspect of the disclosure, areas in the breast may be defined and percent reduction in the variability may be determined for each breast region. The percent reduction may be displayed for each region. In other aspects, the percent reduction may be determined for the whole breast instead of specific regions or areas.

In some aspects, the heat maps may be used for recommendations of postures or changing running styles. For example, the heat map may show an asymmetry of the variability in the displacement in the left and right breasts, which may be caused by asymmetry of the breasts, the running postures, and/or the interaction between the bra and the breasts. This may be impacted by the rotation and sway of the torso during running, and/or the interaction between the bra and the breasts.

In some aspects of the disclosure, aspects of the disclosure may be used to track and evaluate the performance of breast implants or breast reconstruction for surgeons. For example, when one breast is reconstructed, a goal is for it to have similar displacement with the other breast (e.g., bounce or shape movement). In accordance with aspects of the disclosure, the displacement of the reconstructed breast may be compared with the other breast (both vertical displacement and horizontal displacement). The displacement pattern(s) may be displayed as a heat map for the reconstructed and other breast, e.g., side-by-side.

Similarly, when both breasts are reconstructed or have implants, a goal is for them to have similar displacement (e.g., bounce or shape movement). In accordance with aspects of the disclosure, the displacement of the reconstructed breasts may be compared (both vertical displacement and horizontal displacement). The displacement pattern(s) may be displayed as a heat map, e.g., side-by-side. The heat maps may be used to confirm that the movement is substantially the same. Additionally, the heat maps may be used to confirm that the movement is similar to the movement of real breasts.

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "processor" may include a single core processor, a multi-core processor, multiple processors located in a single device, or multiple processors in wired or wireless communication with each other and distributed over a network of devices, the Internet, or the cloud. Accordingly, as used herein, functions, features or instructions performed or configured to be performed by a "processor", may include the performance of the functions, features or instructions by a single core processor, may include performance of the functions, features or instructions collectively or collaboratively by multiple cores of a multi-core processor, or may include performance of the functions, features or instructions collectively or collaboratively by multiple processors, where each processor or core is not required to perform every function, feature or instruction individually.

Aspects of the present disclosure are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

**Claims**

1. A non-contact method for determining a boundary of breasts comprising:

   receiving, by a processor, a plurality of three-dimensional (3D) images, the plurality of 3D images being successive 3D images, the plurality of 3D images including the breasts of the same individual, where the 3D images are acquired while the individual is moving;
   receiving, by the processor, a three-dimensional (3D) image acquired while the individual is stationary;
   defining a number of datapoints on the surface of the breasts in the 3D image acquired while the individual is stationary and a number of datapoints on the surface of an alignment regior in the 3D image acquired while the individual is stationary;
   selecting a subset of the 3D images acquired while the individual is moving;
   for each selected 3D image in the subset,
   pre-processing the selected 3D image to at least remove image data outside a predetermined region and rotate the selected 3D image to have each selected 3D image in the same orientation as the 3D image acquired while the individual is stationary;
   aligning the selected 3D image with respect to the alignment region of the 3D image acquired when the individual is stationary;
   defining a number of datapoints on the surface of the breasts in the selected 3D image
   ; and
   comparing the selected 3D image with the 3D image acquired when the individual is stationary by determining for each defined datapoint a vertical displacement;
   determining, for each defined datapoint, a displacement parameter based on the determined vertical displacement for each 3D image in the subset of 3D images with respect to the 3D image acquired when the individual is stationary for the same defined datapoint;
   generating a mapping based on the displacement parameter for each defined datapoint;

and

determining the boundary of the breasts using a threshold based on the mapping.

2. The non-contact method of claim 1, wherein the subset of 3D images comprises 3D images showing at least one complete gait cycle and wherein the subset of 3D images comprises at least a predetermined number of 3D images.

3. The non-contact method of claim 1 or claim 2, wherein the subset of 3D images comprises 3D images acquired after a preset number of 3D images and before a preset number of 3D images.

4. The non-contact method of any one of claims 1 to claim 3, wherein the predetermined region includes the torso and the preprocessing further comprises identifying an underbust level and bust point for each breast, and removing image data below the identified underbust level.

5. The non-contact method of any one claims 1 to 4, wherein the alignment region is at an upper back area of the individual.

6. The non-contact method of claim 5, wherein the aligning comprises minimizing a shape discrepancy between each selected 3D image and the 3D image acquired while the individual is stationary by iteratively moving a selected 3D image and calculating the shape discrepancy.

7. The non-contact method of any one of claims 1 to 6, wherein the defining a number of datapoints on the surface of the breasts comprises:

   partitioning, by the processor, each breast into vertical slices;
   partitioning, by the processor, each vertical slice into a plurality of portions on the surface of the respective breast based on a fixed angular interval, wherein each portion corresponds to an angle value, and each portion includes a set of points;
   for each portion on each slice:

      determining, by the processor, an average distance among distances of the set of points with respect to one of the associated reference points for a corresponding vertical slice; and
      setting, by the processor, a point associated with the average distance as a datapoint represented by the angle value corresponding to the portion, where the datapoint is one of the number of datapoints identified.

8. The non-contact method of claim 7, wherein the defining a number of datapoints on the surface of the breasts further comprises:

   determining, an absence of image points in particular portions in the vertical slices, wherein the absent image points are removed from the selected 3D image during the pre-processing; and
   assigning a set of undefined values to the absent image points in the particular portion as datapoints.

9. The non-contact method of any one of claims 1 to 8, wherein the pre-processing further comprises determining whether another body part is covering a surface of the breast and torso region and in response to determining that another body part is covering a surface of the breast or torso region, removing image data associated with the another body part and filling in a space corresponding to the removed image data with surface image points predicted for the space to maintain a curvature with a surrounding surface of the breast or maintain the curvature of the torso region.

10. The non-contact method of any one of claims 1 to 9, wherein the vertical displacement is determined using $d_j = z_{ij} = z_{i0}$, where $d_j$ is an array containing the vertical displacements of all the defined datapoints for the jth 3D image, where j is $1 \leq j \leq N$, where N is the number of 3D images in the subset, $z_{ij}$ is the z-coordinate of the i-th defined datapoint of that jth 3D image ($1 \leq i \leq M$), where M is the number of defined datapoints, while $z_{i0}$ is the z-coordinate of the i-th point of the 3D image acquired while the same individual is stationary.

11. The non-contact method of claim 10, wherein the displacement parameter is a standard deviation.

12. The non-contact method of claim 7, wherein the vertical slices are parallel to coronal plane.

13. The non-contact method of any one of claims 1 to 12, wherein the threshold is determined based on a range of the displacement parameter and a preset percentage.

14. The non-contact method of claim 13, wherein the threshold is determined by obtained from an average of the displacement parameters in a first region and subtracting an average of the displacement parameters in a second region and multiplying by the preset percentage.

15. The non-contact method of claim 14, wherein the determining of the boundary further comprises identifying, for each angle having a datapoint between a first angle and a second angle, a vertical slice having the displacement parameter closest to the threshold and identifying a median vertical slice among the identified vertical slices.

16. The non-contact method of claim 15, further comprising removing datapoints in the posterior direction of the median vertical slice.

17. The non-contact method of any one of claims 1 to 16, wherein the pre-processing further comprises:

determining a first average value of image points in the predetermined region in a first direction, the first direction being orthogonal to a longitudinal axis of the individual;
determining a second average value of image points in the predetermined region in a second direction orthogonal to the first direction and orthogonal to the longitudinal axis of the body; and
defining the central axis of the predetermined region as intersecting by the first average value and the second average value and parallel to the longitudinal axis of the body.

18. The non-contact method of claim 17, wherein the pre-processing further comprises shifting the selected 3D image such that the central axis intersects an origin.

19. The non-contact method of any one of claims 1 to 11, wherein the defining a number of datapoints on the surface of the breasts comprises:

partitioning, by the processor, each breast into vertical slices, the vertical slices being parallel to the sagittal plane;
partitioning, by the processor, each vertical slice into a plurality of portions on the surface of the respective breast based on a fixed interval with respect to a first direction, wherein each portion corresponds to a specific value in the first direction, and each portion includes a set of points, the first direction being orthogonal to the longitudinal axis and parallel to the sagittal plane;
for each portion on each slice:

determining, by the processor, an average coordinate among coordinates of the set of points for a corresponding vertical slice, the coordinate being in a direction parallel to the longitudinal axis; and
setting, by the processor, a point associated with the average coordinate as a datapoint represented by the specific value corresponding to the portion, where the datapoint is one of the number of datapoints identified.

20. The non-contact method of claim 19, wherein the determining of the boundary further comprises, identifying, for each vertical slice, the specific value having the displacement parameter closest to the threshold and identifying a median specific value among the identified specific values.

21. The non-contact method of claim 20, further comprising removing datapoints in the posterior direction of the median specific value.

22. The non-contact method of any one of claims 1 to 21, further comprising displaying the mapping.

23. The non-contact method of claim 22, further comprising removing image data from the 3D image acquired when the individual is stationary based on the threshold and displaying a 3D image of the breasts.

24. A non-contact method for determining a boundary of breasts comprising:

receiving, by a processor, a plurality of three-dimensional (3D) images, the plurality of 3D images being successive 3D images, the plurality of 3D images including the breasts of the same individual, where the 3D images are acquired while the individual is moving;
selecting a subset of the 3D images acquired while the individual is moving;

selecting one of the 3D images as a base image;
for the base image:

pre-processing the base image to at least remove image data outside a predetermined region and rotate to a target orientation;
defining a number of datapoints on the surface of the breasts and a number of datapoints on the surface of an alignment region:

for the remaining selected 3D images in the subset or the selected 3D images in the subset:

pre-processing the 3D image to at least remove image data outside a predetermined region and rotate the 3D image to have each 3D image selected in the same orientation as the base image;
aligning the 3D image with respect to the alignment region of the base image;
defining a number of datapoints on the surface of the breasts in the 3D image; and
comparing the 3D image with the base image by determining for each defined datapoint a vertical displacement;

determining, for each defined datapoint, a displacement parameter based on the determined vertical displacement for each 3D image selected with respect to the base image for the same defined datapoint;
generating a mapping based on the displacement parameter for each defined datapoint; and
determining the boundary of the breasts using a threshold based on the mapping.

## Patentansprüche

1. Berührungsloses Verfahren zum Bestimmen einer Grenze von Brüsten, das Folgendes beinhaltet:

Empfangen, durch einen Prozessor, mehrerer 3D-(dreidimensionaler)-Bilder, wobei die mehreren 3D-Bilder aufeinanderfolgende 3D-Bilder sind, wobei die mehreren 3D-Bilder die Brüste derselben Person umfassen, wobei die 3D-Bilder während der Bewegung der Person aufgenommen werden;
Empfangen, durch den Prozessor, eines 3D-(dreidimensionalen)-Bildes, das während des Stillstands der Person aufgenommen wurde;
Definieren einer Anzahl von Datenpunkten auf der Oberfläche der Brüste in dem im Stillstand der Person aufgenommenen 3D-Bild und einer Anzahl von Datenpunkten auf der Oberfläche einer Ausrichtungsregion in dem im Stillstand der Person aufgenommenen 3D-Bild;
Auswählen eines Teilsatzes der während der Bewegung der Person aufgenommenen 3D-Bilder;
für jedes ausgewählte 3D-Bild in dem Teilsatz
Vorverarbeiten des ausgewählten 3D-Bildes, um zumindest Bilddaten außerhalb einer vorbestimmten Region zu entfernen, und Drehen des ausgewählten 3D-Bildes, damit jedes ausgewählte 3D-Bild die gleiche Orientierung wie das im Stillstand der Person aufgenommene 3D-Bild hat;
Ausrichten des ausgewählten 3D-Bildes in Bezug auf die Ausrichtungsregion des im Stillstand der Person aufgenommenen 3D-Bildes;
Definieren einer Anzahl von Datenpunkten auf der Oberfläche der Brüste in dem ausgewählten 3D-Bild; und
Vergleichen des ausgewählten 3D-Bildes mit dem im Stillstand der Person aufgenommenen 3D-Bild durch Bestimmen einer vertikalen Verschiebung für jeden definierten Datenpunkt;
Bestimmen, für jeden definierten Datenpunkt, eines Verschiebungsparameters auf der Basis der bestimmten vertikalen Verschiebung für jedes 3D-Bild in dem Teilsatz von 3D-Bildern in Bezug auf das im Stillstand der Person aufgenommene 3D-Bild für denselben definierten Datenpunkt;
Erzeugen einer Abbildung auf der Basis des Verschiebungsparameters für jeden definierten Datenpunkt; und
Bestimmen der Grenze der Brüste unter Verwendung eines Schwellenwerts auf der Basis der Abbildung.

2. Berührungsloses Verfahren nach Anspruch 1, wobei der Teilsatz von 3D-Bildern 3D-Bilder umfasst, die mindestens einen vollständigen Gangzyklus zeigen, und wobei der Teilsatz von 3D-Bildern mindestens eine vorbestimmte Anzahl von 3D-Bildern umfasst.

3. Berührungsloses Verfahren nach Anspruch 1 oder Anspruch 2, wobei der Teilsatz von 3D-Bildern 3D-Bilder umfasst, die nach einer voreingestellten Anzahl von 3D-Bildern und vor einer voreingestellten Anzahl von 3D-Bildern aufgenommen wurden.

4. Berührungsloses Verfahren nach einem der Ansprüche 1 bis 3, wobei die vorbestimmte Region den Rumpf umfasst und die Vorverarbeitung ferner das Identifizieren einer Unterbrustlinie und eines Brustpunkts für jede Brust und das Entfernen von Bilddaten unterhalb der identifizierten Unterbrustlinie beinhaltet.

5. Berührungsloses Verfahren nach einem der Ansprüche 1 bis 4, wobei sich die Ausrichtungsregion in einem oberen Rückenbereich der Person befindet.

6. Berührungsloses Verfahren nach Anspruch 5, wobei das Ausrichten das Minimieren einer Formabweichung zwischen jedem ausgewählten 3D-Bild und dem im Stillstand der Person aufgenommenen 3D-Bild durch iteratives Bewegen eines ausgewählten 3D-Bildes und Berechnen der Formabweichung beinhaltet.

7. Berührungsloses Verfahren nach einem der Ansprüche 1 bis 6, wobei das Definieren einer Anzahl von Datenpunkten auf der Oberfläche der Brüste Folgendes beinhaltet:

   Unterteilen, durch den Prozessor, jeder Brust in vertikale Scheiben;
   Unterteilen, durch den Prozessor, jeder vertikalen Scheibe in mehrere Abschnitte auf der Oberfläche der jeweiligen Brust auf der Basis eines festen Winkelintervalls, wobei jeder Abschnitt einem Winkelwert entspricht und jeder Abschnitt einen Satz von Punkten enthält;
   für jeden Abschnitt auf jeder Scheibe:

   Bestimmen, durch den Prozessor, eines durchschnittlichen Abstands zwischen Abständen des Satzes von Punkten in Bezug auf einen der assoziierten Referenzpunkte für eine entsprechende vertikale Scheibe; und
   Festlegen, durch den Prozessor, eines mit dem durchschnittlichen Abstand assoziierten Punkts als Datenpunkt, der durch den Winkelwert entsprechend dem Abschnitt dargestellt wird, wobei der Datenpunkt einer der Anzahl von identifizierten Datenpunkten ist.

8. Berührungsloses Verfahren nach Anspruch 7, wobei das Definieren einer Anzahl von Datenpunkten auf der Oberfläche der Brüste ferner Folgendes beinhaltet:

   Bestimmen eines Fehlens von Bildpunkten in bestimmten Abschnitten in den vertikalen Scheiben, wobei die fehlenden Bildpunkte während der Vorverarbeitung aus dem ausgewählten 3D-Bild entfernt werden; und
   Zuweisen eines Satzes von undefinierten Werten zu den fehlenden Bildpunkten in dem bestimmten Abschnitt als Datenpunkte.

9. Berührungsloses Verfahren nach einem der Ansprüche 1 bis 8, wobei das Vorverarbeiten ferner Folgendes beinhaltet: Feststellen, ob ein anderer Körperteil eine Oberfläche der Brust- und Rumpfregion bedeckt, und Entfernen, als Reaktion auf die Feststellung, dass ein anderer Körperteil eine Oberfläche der Brust- oder Rumpfregion bedeckt, von mit dem anderen Körperteil assoziierten Bilddaten und Ausfüllen eines Raums entsprechend den entfernten Bilddaten mit für den Raum vorhergesagten Oberflächenbildpunkten, um eine Krümmung mit einer umgebenden Oberfläche der Brust beizubehalten oder die Krümmung der Rumpfregion beizubehalten.

10. Berührungsloses Verfahren nach einem der Ansprüche 1 bis 9, wobei die vertikale Verschiebung mittels $d_j = z_{ij} - z_{i0}$ bestimmt wird, wobei $d_j$ ein Array ist, das die vertikalen Verschiebungen aller definierten Datenpunkte für das j-te 3D-Bild enthält, wobei j $1 \leq j \leq N$ ist, wobei N die Anzahl von 3D-Bildern in dem Teilsatz ist, $z_{ij}$ die z-Koordinate des i-ten definierten Datenpunkts dieses j-ten 3D-Bildes ($1 \leq i \leq M$) ist, wobei M die Anzahl definierter Datenpunkte ist, während $z_{i0}$ die z-Koordinate des i-ten Punktes des 3D-Bildes ist, das im Stillstand derselben Person aufgenommen wurde.

11. Berührungsloses Verfahren nach Anspruch 10, wobei der Verschiebungsparameter eine Standardabweichung ist.

12. Berührungsloses Verfahren nach Anspruch 7, wobei die vertikalen Scheiben parallel zur Koronalebene sind.

13. Berührungsloses Verfahren nach einem der Ansprüche 1 bis 12, wobei der Schwellenwert auf der Basis eines Bereichs des Verschiebungsparameters und eines voreingestellten Prozentsatzes bestimmt wird.

14. Berührungsloses Verfahren nach Anspruch 13, wobei der Schwellenwert durch ermittelt von einem Durchschnitt [sic] der Verschiebungsparameter in einer ersten Region, Subtrahieren eines Durchschnitts der Verschiebungsparameter in einer zweiten Region davon und Multiplizieren des Ergebnisses mit dem voreingestellten Prozentsatz bestimmt wird.

15. Berührungsloses Verfahren nach Anspruch 14, wobei das Bestimmen der Grenze ferner das Identifizieren, für jeden Winkel mit einem Datenpunkt zwischen einem ersten Winkel und einem zweiten Winkel, einer vertikalen Scheibe mit dem dem Schwellenwert am nächsten liegenden Verschiebungsparameter und Identifizieren einer medianen vertikalen Scheibe unter den identifizierten vertikalen Scheiben beinhaltet.

16. Berührungsloses Verfahren nach Anspruch 15, das ferner das Entfernen von Datenpunkten in der posterioren Richtung der medianen vertikalen Scheibe beinhaltet.

17. Berührungsloses Verfahren nach einem der Ansprüche 1 bis 16, wobei das Vorverarbeiten ferner Folgendes beinhaltet:

Bestimmen eines ersten Durchschnittswerts von Bildpunkten in der vorbestimmten Region in einer ersten Richtung, wobei die erste Richtung orthogonal zu einer Längsachse der Person ist;
Bestimmen eines zweiten Durchschnittswerts von Bildpunkten in der vorbestimmten Region in einer zweiten Richtung orthogonal zur ersten Richtung und orthogonal zur Längsachse des Körpers; und
Definieren der Mittelachse der vorbestimmten Region als schneidend durch den ersten Durchschnittswert und den zweiten Durchschnittswert und parallel zur Längsachse des Körpers.

18. Berührungsloses Verfahren nach Anspruch 17, wobei das Vorverarbeiten ferner das Verschieben des ausgewählten 3D-Bildes beinhaltet, so dass die Mittelachse einen Ursprung schneidet.

19. Berührungsloses Verfahren nach einem der Ansprüche 1 bis 11, wobei das Definieren einer Anzahl von Datenpunkten auf der Oberfläche der Brüste Folgendes beinhaltet:

Unterteilen, durch den Prozessor, jeder Brust in vertikale Scheiben, wobei die vertikalen Scheiben parallel zur Sagittalebene liegen;
Unterteilen, durch den Prozessor, jeder vertikalen Scheibe in mehrere Abschnitte auf der Oberfläche der jeweiligen Brust auf der Basis eines festen Intervalls in Bezug auf eine erste Richtung, wobei jeder Abschnitt einem spezifischen Wert in der ersten Richtung entspricht und jeder Abschnitt einen Satz von Punkten enthält, wobei die erste Richtung orthogonal zur Längsachse und parallel zur Sagittalebene ist;
für jeden Abschnitt auf jeder Scheibe:

Bestimmen, durch den Prozessor, einer durchschnittlichen Koordinate zwischen Koordinaten des Satzes von Punkten für eine entsprechende vertikale Scheibe, wobei die Koordinate in einer Richtung parallel zur Längsachse ist; und
Festlegen, durch den Prozessor, eines mit der durchschnittlichen Koordinate assoziierten Punkts als einen Datenpunkt, der durch den spezifischen Wert entsprechend dem Abschnitt dargestellt wird, wobei der Datenpunkt einer aus der Anzahl von identifizierten Datenpunkten ist.

20. Berührungsloses Verfahren nach Anspruch 19, wobei das Bestimmen der Grenze ferner das Identifizieren, für jede vertikale Scheibe, des spezifischen Werts mit dem dem Schwellenwert am nächsten liegenden Verschiebungsparameter und das Identifizieren eines medianen spezifischen Werts unter den identifizierten spezifischen Werten beinhaltet.

21. Berührungsloses Verfahren nach Anspruch 20, das ferner das Entfernen von Datenpunkten in der posterioren Richtung des medianen spezifischen Werts beinhaltet.

22. Berührungsloses Verfahren nach einem der Ansprüche 1 bis 21, das ferner das Anzeigen der Abbildung beinhaltet.

23. Berührungsloses Verfahren nach Anspruch 22, das ferner das Entfernen von Bilddaten aus dem im Stillstand der Person aufgenommenen 3D-Bild auf der Basis des Schwellenwerts und das Anzeigen eines 3D-Bildes der Brüste beinhaltet.

24. Berührungsloses Verfahren zum Bestimmen einer Grenze von Brüsten, das Folgendes beinhaltet:

Empfangen, durch einen Prozessor, mehrerer 3D-(dreidimensionaler)-Bilder, wobei die mehreren 3D-Bilder aufeinanderfolgende 3D-Bilder sind, wobei die mehreren 3D-Bilder die Brüste derselben Person umfassen, wobei die 3D-Bilder während der Bewegung der Person aufgenommen werden;

Auswählen eines Teilsatzes der während der Bewegung der Person aufgenommenen 3D-Bilder;
Auswählen eines der 3D-Bilder als Basisbild;
für das Basisbild:

Vorverarbeiten des Basisbildes, um zumindest Bilddaten außerhalb einer vorbestimmten Region zu entfernen und es in eine Zielorientierung zu drehen;
Definieren einer Anzahl von Datenpunkten auf der Oberfläche der Brüste und einer Anzahl von Datenpunkten auf der Oberfläche einer Ausrichtungsregion;
für die verbleibenden ausgewählten 3D-Bilder in dem Teilsatz oder die ausgewählten 3D-Bilder in dem Teilsatz:

Vorverarbeiten des 3D-Bildes, um zumindest Bilddaten außerhalb einer vorbestimmten Region zu entfernen, und Drehen des 3D-Bildes, damit jedes ausgewählte 3D-Bild die gleiche Orientierung wie das Basisbild aufweist;
Ausrichten des 3D-Bildes in Bezug auf die Ausrichtungsregion des Basisbildes;
Definieren einer Anzahl von Datenpunkten auf der Oberfläche der Brüste im 3D-Bild; und
Vergleichen des 3D-Bildes mit dem Basisbild durch Bestimmen einer vertikalen Verschiebung für jeden definierten Datenpunkt;

Bestimmen, für jeden definierten Datenpunkt, eines Verschiebungsparameters auf der Basis der bestimmten vertikalen Verschiebung für jedes in Bezug auf das Basisbild für denselben definierten Datenpunkt ausgewählte 3D-Bild;
Erzeugen einer Abbildung auf der Basis des Verschiebungsparameters für jeden definierten Datenpunkt; und
Bestimmen der Grenze der Brüste unter Verwendung eines Schwellenwerts auf der Basis der Abbildung.

## Revendications

1. Procédé sans contact pour déterminer une limite des seins comprenant :

recevoir, par un processeur, une pluralité d'images tridimensionnelles (3D), la pluralité d'images 3D étant des images 3D successives, la pluralité d'images 3D comprenant les seins du même individu, dans lequel les images 3D sont acquises pendant que l'individu bouge ;
recevoir, par le processeur, une image tridimensionnelle (3D) acquise pendant que l'individu est stationnaire ;
définir un nombre de points de données sur la surface des seins dans l'image 3D acquise pendant que l'individu est stationnaire et un nombre de points de données sur la surface d'une région d'alignement dans l'image 3D acquise pendant que l'individu est stationnaire ;
sélectionner un sous-ensemble des images 3D acquises pendant que l'individu bouge ;
pour chaque image 3D sélectionnée dans le sous-ensemble,
prétraiter l'image 3D sélectionnée pour retirer au moins des données d'image hors d'une région prédéterminée et tourner l'image 3D sélectionnée pour avoir chaque image 3D sélectionnée dans la même orientation que l'image 3D acquise pendant que l'individu est stationnaire ;
aligner l'image 3D sélectionnée par rapport à la région d'alignement de l'image 3D acquise lorsque l'individu est stationnaire ;
définir un nombre de points de données sur la surface des seins dans l'image 3D sélectionnée ; et
comparer l'image 3D sélectionnée à l'image 3D acquise pendant que l'individu est stationnaire en déterminant pour chaque point de données défini un déplacement vertical ;
déterminer, pour chaque point de données défini, un paramètre de déplacement sur la base du déplacement vertical déterminé pour chaque image 3D dans le sous-ensemble d'images 3D par rapport à l'image 3D acquise pendant que l'individu est stationnaire pour le même point de données défini ;
générer une cartographie sur la base du paramètre de déplacement pour chaque point de données défini ; et
déterminer la limite des seins en utilisant un seuil sur la base de la cartographie.

2. Procédé sans contact selon la revendication 1, dans lequel le sous-ensemble d'images 3D comprend des images 3D montrant au moins un cycle de démarche complet et dans lequel le sous-ensemble d'images 3D comprend au moins un nombre prédéterminé d'images 3D.

3. Procédé sans contact selon la revendication 1 ou la revendication 2, dans lequel le sous-ensemble d'images 3D comprend des images 3D acquises après un nombre préréglé d'images 3D et avant un nombre préréglé d'images 3D.

4. Procédé sans contact selon l'une quelconque des revendications 1 à 3, dans lequel la région prédéterminée comprend le torse et le prétraitement comprend en outre identifier un niveau sous la poitrine et la pointe du sein pour chaque sein, et retirer des données d'image en dessous du niveau sous la poitrine identifié.

5. Procédé sans contact selon l'une quelconque des revendications 1 à 4, dans lequel la région d'alignement se trouve à une zone supérieure du dos de l'individu.

6. Procédé sans contact selon la revendication 5, dans lequel l'alignement comprend minimiser un écart de forme entre chaque image 3D sélectionnée et l'image 3D acquise pendant que l'individu est stationnaire en déplaçant de manière itérative une image 3D sélectionnée et en calculant l'écart de forme.

7. Procédé sans contact selon l'une quelconque des revendications 1 à 6, dans lequel définir un nombre de points de données sur la surface des seins comprend :

   segmenter, par le processeur, chaque sein en des tranches verticales ;
   segmenter, par le processeur, chaque tranche verticale en une pluralité de parties sur la surface du sein respectif sur la base d'un intervalle angulaire fixe, dans lequel chaque partie correspond à une valeur d'angle, et chaque partie comprend un ensemble de points ;
   pour chaque partie sur chaque tranche :

   déterminer, par le processeur, une distance moyenne parmi les distances de l'ensemble de points par rapport à l'un des points de référence associés pour une tranche verticale correspondante ; et
   régler, par le processeur, un point associé à la distance moyenne comme un point de données représenté par la valeur d'angle correspondant à la partie, dans lequel le point de données est l'un du nombre de points de données identifiés.

8. Procédé sans contact selon la revendication 7, dans lequel définir un nombre de points de données sur la surface des seins comprend en outre :

   déterminer, une absence de points d'image dans des parties particulières dans les tranches verticales, dans lequel les points d'image absents sont retirés de l'image 3D sélectionnée durant le prétraitement ; et
   attribuer un ensemble de valeurs indéfinies aux points d'image absents dans la partie particulière comme des points de données.

9. Procédé sans contact selon l'une quelconque des revendications 1 à 8, dans lequel le prétraitement comprend en outre déterminer si une autre partie du corps couvre une surface de la région des seins et du torse et en réponse à déterminer qu'une autre partie du corps couvre une surface de la région des seins ou du torse, retirer les données d'image associées à une autre partie du corps et remplir un espace correspondant aux données d'image retirées avec des points d'image superficiels prévus pour l'espace afin de conserver une courbure avec une surface environnante du sein ou conserver la courbure de la région du torse.

10. Procédé sans contact selon l'une quelconque des revendications 1 à 9, dans lequel le déplacement vertical est déterminé en utilisant $d_j = z_{ij} - z_{i0}$, où $d_j$ est une série de déplacements verticaux de tous les points de données définis pour la j$^{ème}$ image 3D, où j est $1 \leq j \leq N$, où N est le nombre d'images 3D dans le sous-ensemble, $z_{ij}$ est la coordonnée z du i-$^{ème}$ point de données défini de cette j$^{éme}$ image 3D ($1 \leq i \leq M$), où M est le nombre de points de données définis, tandis que $z_{i0}$ est la coordonnée z du i-$^{ème}$ point de l'image 3D acquise pendant que le même individu est stationnaire.

11. Procédé sans contact selon la revendication 10, dans lequel le paramètre de déplacement est un écart-type.

12. Procédé sans contact selon la revendication 7, dans lequel les tranches verticales sont parallèles au plan coronal.

13. Procédé sans contact selon l'une quelconque des revendications 1 à 12, dans lequel le seuil est déterminé sur la base d'une plage du paramètre de déplacement et d'un pourcentage préréglé.

14. Procédé sans contact selon la revendication 13, dans lequel le seuil est déterminé d'une moyenne des paramètres de déplacement obtenus dans une première région et en soustrayant une moyenne des paramètres de déplacement dans une deuxième région et en multipliant par le pourcentage préréglé.

15. Procédé sans contact selon la revendication 14, dans lequel déterminer la limite comprend en outre identifier, pour chaque angle ayant un point de données entre un premier angle et un deuxième angle, une tranche verticale ayant le paramètre de déplacement le plus proche du seuil et identifier une tranche verticale médiane parmi les tranches verticales identifiées.

16. Procédé sans contact selon la revendication 15, comprenant en outre retirer des points de données dans la direction postérieure de la tranche verticale médiane.

17. Procédé sans contact selon l'une quelconque des revendications 1 à 16, dans lequel le prétraitement comprend en outre :

déterminer une première valeur moyenne de points d'image dans la région prédéterminée dans une première direction, la première direction étant orthogonale à un axe longitudinal de l'individu ;
déterminer une deuxième valeur moyenne de points d'image dans la région prédéterminée dans une deuxième direction orthogonale à la première direction et orthogonale à l'axe longitudinal du corps ; et
définir l'axe central de la région prédéterminée comme intersectant la première valeur moyenne et la deuxième valeur moyenne et parallèle à l'axe longitudinal du corps.

18. Procédé sans contact selon la revendication 17, dans lequel le prétraitement comprend en outre déplacer l'image 3D sélectionnée de sorte que l'axe central intersecte une origine.

19. Procédé sans contact selon l'une quelconque des revendications 1 à 11, dans lequel définir un nombre de points de données sur la surface des seins comprend :

segmenter, par le processeur, chaque sein en des tranches verticales, les tranches verticales étant parallèles au plan sagittal ;
segmenter, par le processeur, chaque tranche verticale en une pluralité de parties sur la surface du sein respectif sur la base d'un intervalle fixe par rapport à une première direction, dans lequel chaque partie correspond à une valeur spécifique dans la première direction, et chaque partie comprend un ensemble de points, la première direction étant orthogonale à l'axe longitudinal et parallèle au plan sagittal ;
pour chaque partie sur chaque tranche :

déterminer, par le processeur, une coordonnée moyenne parmi des coordonnées de l'ensemble de points pour une tranche verticale correspondante, la coordonnée étant dans une direction parallèle à l'axe longitudinal ; et
régler, par le processeur, un point associé à la coordonnée moyenne comme un point de données représenté par la valeur spécifique correspondant à la partie, dans lequel le point de données est l'un du nombre de points de données identifiés.

20. Procédé sans contact selon la revendication 19, dans lequel déterminer la limite comprend en outre identifier, pour chaque tranche verticale, la valeur spécifique ayant le paramètre de déplacement le plus proche du seuil et identifier une valeur médiane spécifique parmi les valeurs spécifiques identifiées.

21. Procédé sans contact selon la revendication 20, comprenant en outre retirer des points de données dans la direction postérieure de la valeur médiane spécifique.

22. Procédé sans contact selon l'une quelconque des revendications 1 à 21, comprenant en outre afficher la cartographie.

23. Procédé sans contact selon la revendication 22, comprenant en outre retirer des données d'image de l'image 3D acquise lorsque l'individu est stationnaire sur la base du seuil et afficher une image 3D des seins.

24. Procédé sans contact pour déterminer une limite des seins comprenant :

recevoir, par un processeur, une pluralité d'images tridimensionnelles (3D), la pluralité d'images 3D étant des images 3D successives, la pluralité d'images 3D comprenant les seins du même individu, dans lequel les images 3D sont acquises pendant que l'individu bouge ;

sélectionner un sous-ensemble des images 3D acquises pendant que l'individu bouge ;

sélectionner l'une des images 3D comme une image de base ; pour l'image de base :

prétraiter l'image de base pour retirer au moins des données d'image hors d'une région prédéterminée et la tourner à une orientation cible ;

définir un nombre de points de données sur la surface des seins et un nombre de points de données sur la surface d'une région d'alignement ;

pour le reste des images 3D sélectionnées dans le sous-ensemble ou les images 3D sélectionnées dans le sous-ensemble :

prétraiter l'image 3D pour retirer au moins des données d'image hors d'une région prédéterminée et tourner l'image 3D afin d'avoir chaque image 3D sélectionnée dans la même orientation que l'image de base ;

aligner l'image 3D par rapport à la région d'alignement de l'image de base ;

définir un nombre de points de données sur la surface des seins dans l'image 3D ; et

comparer l'image 3D à l'image de base en déterminant un déplacement vertical pour chaque point de données défini ;

déterminer, pour chaque point de données défini, un paramètre de déplacement sur la base du déplacement vertical déterminé pour chaque image 3D sélectionnée par rapport à l'image de base pour le même point de données défini ;

générer une cartographie sur la base du paramètre de déplacement pour chaque point de données défini ; et

déterminer la limite des seins en utilisant un seuil sur la base de la cartographie.

Device 10

Processor
14

Imaging Device
12

Memory
16

Display
18

Fig. 1A

Server 40

Processor
14

Memory
16

Communication Interface
45

Client 50

Imaging Device
12

Display
18

Communication Interface
55

30

Fig. 1B

**Fig. 2**

```
┌─────────────────────────────────┐
│ Receive Image Of Stationary     │
│ Individual from Image Scanner   │
│ S1                              │
└─────────────────────────────────┘
              │
              ▼
┌─────────────────────────────────┐
│ Receive Images Of Moving        │
│ Individual from Image Scanner   │
│ S3                              │
└─────────────────────────────────┘
              │
              ▼
┌─────────────────────────────────┐
│ Select Subset of Images (Frames)│
│ S5                              │
└─────────────────────────────────┘
              │
              ▼
┌─────────────────────────────────┐
│ Set I=1                         │
│ S7                              │
└─────────────────────────────────┘
              │
              ▼
┌─────────────────────────────────┐
│ Pre-Process Image               │
│ S9                              │
└─────────────────────────────────┘
              │
              ▼
┌─────────────────────────────────┐
│ Define Datapoints In            │
│ Alignment Region                │
│ S11                             │
└─────────────────────────────────┘
              │
              ▼
┌─────────────────────────────────┐
│ Shift to Align                  │
│ S13                             │
└─────────────────────────────────┘
              │
              ▼
┌─────────────────────────────────┐
│ Define Datapoints In            │
│ Breasts                         │
│ S15                             │
└─────────────────────────────────┘
              │
              ▼
┌─────────────────────────────────┐
│ Determine Vertical              │
│ Displacement For Each           │
│ Datapoint                       │
│ S17                             │
└─────────────────────────────────┘
              │
              ▼
          I= Frame
          Max in
          Subset?
          S19
```

NO → Set I=I +1 S20 → (back to Pre-Process Image S9)

YES →

```
┌─────────────────────────────────┐
│ Calculate Displacement          │
│ Parameter for All               │
│ Datapoints                      │
│ S21                             │
└─────────────────────────────────┘
              │
              ▼
┌─────────────────────────────────┐
│ Generate Heat Map               │
│ S23                             │
└─────────────────────────────────┘
              │
              ▼
┌─────────────────────────────────┐
│ Determine Threshold             │
│ S25                             │
└─────────────────────────────────┘
              │
              ▼
┌─────────────────────────────────┐
│ Separate Breasts Based          │
│ on threshold                    │
│ S27                             │
└─────────────────────────────────┘
```

Fig. 3

Obtain Predetermined
Section of 3-D Image
S50

Fill in Holes Causes By
Covered Part
S52

Rotate To Match
Orientation With
Stationary Image
S54

Define Central Axis
and Shift
S56

Identify Bust Points
S58

Identify Underbust Level
S60

Fig. 4

Fig. 5A    Fig. 5B    Fig. 5C

Fig. 6B

Front view

600

Fig. 6A

Then side
view

600A

Fig. 6C    Fig. 6D

## Fig. 6E

600B

## Fig. 7A

705

700

Bust Slice 705

Reference Point for Bust Slice 755

Datapoints on Bust Slice 750

Bust Point
760

Fig. 7B

```
┌─────────────────────────────┐
│     Determine Average with    │
│     Respect to First Direction │
│             S70               │
└─────────────────────────────┘
              │
              ▼
┌─────────────────────────────┐
│  Determine Average with Respect │
│      to Second Direction      │
│             S72               │
└─────────────────────────────┘
              │
              ▼
┌─────────────────────────────┐
│    Shift Such That Central Axis │
│  Intersects Reference, e.g., 0,0 │
│             S74               │
└─────────────────────────────┘
```

# Fig. 8

Central axis= (x_mean, y_mean)

## Fig. 9A    900

900

## Fig. 9B

Divide Alignment Region Into S
Horizontal Slices
S100

s =1
S102

Divide Slice into Portions
By Angle Value a
S104

s= s + 1
S118

a = 0
S106

Determine Distances
Between Surface Image
Points Associated with
Portion and Reference
S108

NO

s = S?
S116

YES

Average Determined
Distances
S110

End
S120

a= a + M
S113

Associate Average
Distance with Angle Value
S112

Fig. 10

NO

a =
180?
S114

YES

## Fig. 11B

s=S

Slice
1100

s=1

## 90
## Degrees

180 degrees

Reference Point
For Slice 1110

0 degrees

## Fig. 11A

Fig. 12A

Fig. 12B

Datapoints
1305

Fig. 13A

Z-Axis
Direction

Reference Axis
1310

X-Axis
Direction

Datapoints For
Processed Slice
1305A

Fig. 13B

Vertical Slice
1300

Reference Point For
Processed Slice
1310A

Fig. 13C

Fig. 14

```
┌─────────────────────────┐
│  Divide Breast Region Into T │
│      Vertical Slices         │
│          S150                │
└─────────────────────────┘
            │
            ▼
      ┌──────────┐
      │   t =1    │
      │   s152    │
      └──────────┘
            │
            ▼
┌─────────────────────────┐
│  Divide Slice into Portions  │◄──────────────┐
│    By Angle Value a          │               │
│          S154                │               │
└─────────────────────────┘               │
            │                        ┌──────────┐
            ▼                        │ t= t + 1 │
      ┌──────────┐                  │   S168   │
      │   a = 0   │                  └──────────┘
      │   S156    │                       ▲
      └──────────┘                       │ NO
            │                             │
            ▼                         ╱───────╲
┌─────────────────────────┐         ╱  t = T?  ╲
│   Determine Distances    │─────── ╲   S166    ╱
│  Between Surface Image   │         ╲───────╱
│  Points Associated with  │              │ YES
│  Portion and Reference   │         ┌──────────┐
│          S158            │          │   End    │
└─────────────────────────┘          │   S170   │
            │                         └──────────┘
            ▼
┌─────────────────────────┐
│   Average Determined     │
│       Distances          │
│          S160            │
└─────────────────────────┘
            │
            ▼
┌─────────────────────────┐
│    Associate Average     │
│  Distance with Angle Value │
│          S162            │
└─────────────────────────┘
            │
            ▼
        ╱───────╲
  NO   ╱   a = 0  ╲   YES
◄──── ╲  again?   ╱ ────►
        ╲  S164   ╱
         ╲───────╱

┌──────────┐
│ a= a + N  │
│   S165    │
└──────────┘
```

S15

Datapoints
1305B

Z-Axis
Direction

Fig. 15A

X-axis
direction

Vertical Slices
1300A

Y-Axis Direction

Datapoints for the
Vertical Slices
1305C

Fig. 15B

X-Axis
Direction

Datapoints
1305B

Z-Axis
Direction

Vertical
Slice A

Fig. 15C

Datapoints for the
Vertical Slice
1305C

Y-Axis
Direction

Z-Axis
Direction

Vertical
Slice B

Fig.
15D

Datapoints for the
Vertical Slice
1305C

Y-Axis
Direction

Fig. 16

Divide Breast Region Into T' Vertical Slices by X-Value S150A

t =1 s152

Divide Slice into Portions By Y-Value S154A

y = min S156A

Determine Z-Coordinate for Surface Image Points Associated with Portion and Slice S158

Average Determined Z-Coordinates S160

Associate Z-Coordinate with Y Value Being Processed S162A

Y = max? S164A

y= y + O S165A

t= t + 1 S168

t = T'? S166A

End S170

S15

Fig. 17A

Fig. 17B

Fig. 18

Fig. 19

## Fig. 21A

90°

Z-Axis
Direction

0°

X-Axis Direction

Reference Point
1310

## Fig. 21B

Vertical Slices
1300

Y-Axis
Direction

Separation Slice 2100

## Fig. 20

Set Angle to First
Angle
S200

Identify and
Record Slice
Closest to
threshold
S202

Increment Angle
to Next Datapoint
S206

Angle =
Second
Angle?
S204

NO

YES

Determine Median
of All Identified
Slices
S206

Define Breast
Boundary
S208

Fig. 22

Set Value of
Vertical Slice t to 1
S220

Identify and
Record Closest Y
Value in Slice to
threshold
S222

Determine Median
of All Identified Y
Value
S228

Define Breast
Boundary
S230

t= t +1
S226

t= T'
S224

YES

NO

EP 4 231 868 B1

Fig. 23A          Fig. 23B          Fig. 23C

55

Retrieve Determined
Threshold
S250

Remove Data on
Stationary Image
S252

Define
Datapoints In
Breasts
S254

Determine Shape
Discrepancy with Model
for Each Cup Size
S256

Generate Cup Size
Recommendation
S258

Fig. 24

Fig. 25

Receive Image Of
Stationary Individual
from Image Scanner
S1

↓

Receive Images Of
Moving Individual from
Image Scanner
S3

↓

Select Subset of Images
(Frames)
S5

↓

Set I=1
S7

↓

Pre-Process Image
S9

↓

Define
Datapoints In
Alignment
Region
S11

↓

Shift to Align
S13

↓

Define
Datapoints In
Breasts
S254A

↓

Determine Displacement
For Each Datapoint
S17A

↓

I= Frame
Max in
Subset?
S19

NO → Set I=I +1
S20

YES → Calculate Displacement
Parameter for All
Datapoints
S21

↓

Generate Heat Map
S23

↓

Identified High Levels of
Displacement
S300

↓

Provide Evaluation Based
on Displacement
S302

Fig. 26A

Fig. 26B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011295112 A1

- US 202054172 W

**Non-patent literature cited in the description**

- **KHATAM HAMED et al.** In-vivo quantification of human breast deformation associated with the position change from supine to upright. *Medical Engineering & Physics*, 2015, vol. 37 (1), 13-22
- Studies of Sports Bra Based on Biomorphic Analyses of Females Breasts. **CHANG LI-XIA et al.** Bioinformatics and Biomedical Engineering , 2009. ICBBE 2009. 3rd International Conference on. IEEE, 11 June 2009, 1-4

- Numerical simulation of nonlinear material behaviour: Application to sports bra design. **LIANG RUIXIN et al.** Materials & Design. Elsevier, 31 August 2019, vol. 183
- **CHEN XIAONA et al.** Breast volume measurement by mesh projection method based on 3D point cloud data. *International Journal of Clothing Science and Technology, Bradford, GB*, 31 March 2015, vol. 27, 221-236